(19) Europäisches Patentamt / European Patent Office / Office européen des brevets

(11) **EP 2 726 206 B1**

(12) **FASCICULE DE BREVET EUROPEEN**

(45) Date de publication et mention de la délivrance du brevet:
**29.04.2015 Bulletin 2015/18**

(51) Int Cl.:
***B01L 3/02*** *(2006.01)*  ***G01N 35/10*** *(2006.01)*
***G01F 11/02*** *(2006.01)*

(21) Numéro de dépôt: **12730844.3**

(22) Date de dépôt: **14.06.2012**

(86) Numéro de dépôt international:
**PCT/EP2012/061258**

(87) Numéro de publication internationale:
**WO 2013/000716 (03.01.2013 Gazette 2013/01)**

(54) **PROCEDE DE DETECTION D'ANOMALIES LORS DU REMPLISSAGE D'UN DISPOSITIF DE DOSAGE DE LIQUIDE ET DISPOSITIF DE DOSAGE DE LIQUIDE**

VERFAHREN ZUR FESTSTELLUNG VON ANOMALIEN BEIM FÜLLEN EINER FLÜSSIGKEITSDOSIERVORRICHTUNG UND FLÜSSIGKEITSDOSIERVORRICHTUNG

PROCESS FOR DETECTING ANOMALIES DURING THE FILLING OF A LIQUID METERING DEVICE AND LIQUID METERING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2011 FR 1155747**

(43) Date de publication de la demande:
**07.05.2014 Bulletin 2014/19**

(73) Titulaire: **GILSON SAS**
**95400 Villiers-le-Bel (FR)**

(72) Inventeur: **MILLET, Frédéric**
**F-75014 Paris (FR)**

(74) Mandataire: **Ahner, Philippe et al**
**BREVALEX**
**95, rue d'Amsterdam**
**75378 Paris Cedex 8 (FR)**

(56) Documents cités:
**EP-A1- 2 031 403    WO-A1-2006/040386**
**US-A- 6 022 747    US-B2- 6 938 504**

**Description**

**DOMAINE TECHNIQUE**

L'invention se rapporte au domaine du dosage de liquide avec précision.

Dans les domaines de la médecine, de la pharmacologie et de la chimie, il n'est pas rare d'avoir le besoin de doser avec précision et de manière reproductible un liquide à doser. En effet, de cette précision va dépendre la bonne stoechiométrie de la solution finale, et donc de son efficacité, les bonnes valeurs d'une analyse chimique ou physiologique et, dans le domaine de pharmacologie, l'efficacité et l'innocuité d'une préparation médicamenteuse.

De nos jours, cette précision est généralement atteinte par l'utilisation d'un dispositif de dosage automatisé. Dans certain cas, pour lesquels la précision doit être vérifiable et/ou garantie, ces dispositifs de dosage peuvent mettre en oeuvre un système de détection d'anomalies lors du remplissage du dispositif de dosage de liquide par le liquide à doser.

L'invention se rapporte plus précisément à un procédé de détection d'anomalies lors du remplissage d'un dispositif de dosage de liquide par un liquide à doser et à un dispositif de dosage de liquide mettant en oeuvre un tel procédé.

**ÉTAT DE LA TECHNIQUE ANTÉRIEURE**

Les dispositifs de dosage automatisés, tels que des pipettes automatisées ou les analyseurs chimiques automatisés, sont généralement des dispositifs de dosage comprenant au moins un organe d'aspiration, également appelé cône, destiné à contenir du liquide à doser, un moyen de remplissage automatisé adapté pour remplir l'organe d'aspiration de façon automatisée. Ces dispositifs de dosage automatisés peuvent également comporter un capteur de pression, agencé pour mesurer la pression dans le moyen de remplissage ou dans le cône, et un système de traitement agencé pour commander le moyen de remplissage automatisé et contrôler la pression mesurée par le capteur de pression.

Ces dernières années, avec la généralisation des dispositifs de dosage de liquide automatisés, parallèlement au besoin accru de précision et reproductibilité dans le dosage, des procédés de détection d'anomalies lors du remplissage ont été mis en place.

La demande de brevet européen EP 0571100 A décrit un tel procédé de détection d'anomalies. Ce procédé consiste à, préalablement au dosage du liquide à doser à un volume voulu, faire un enregistrement d'une courbe de pression de référence à ce même volume. Ainsi lors du remplissage du dispositif de dosage par le volume voulu d'un liquide à doser, le système de traitement permet de comparer la courbe de pression mesurée avec la courbe de pression référence. Toute déviation importante entraîne, lors de la mise en oeuvre d'un tel procédé, la détection par le système de traitement d'une anomalie lors du remplissage du dispositif de dosage.

Si un tel procédé permet bien de détecter une anomalie pour un volume voulu de liquide à doser, ce procédé nécessite lors de sa mise en oeuvre un étalonnage en pression préalable à ce même volume voulu. Ainsi, un dispositif de dosage mettant en oeuvre un tel procédé ne peut être adapté que pour la détection d'anomalies à un nombre réduit de volumes de liquide à doser, tout volume non préalablement calibré nécessitant une opération d'étalonnage en pression préalable.

De même, le procédé de détection d'anomalies décrit dans le brevet US 6938504 B est similaire à celui de la demande de brevet EP 0571100 A, ce procédé de détection comprenant une étape supplémentaire de calcul d'une zone de tolérance afin de limiter les risque de « faux positif », c'est-à-dire la détection d'anomalies qui n'en sont pas. Il est donc également nécessaire, lors de la mise en oeuvre de ce procédé, de prévoir un étalonnage en pression préalable du dispositif de dosage au volume voulu.

Ainsi, un dispositif de dosage mettant en oeuvre un tel procédé ne peut être adapté que pour la détection d'anomalies à un nombre réduit de volumes de liquide à doser, tout volume non préalablement calibré nécessitant une opération d'étalonnage en pression préalable.

La demande de brevet EP 2302397 A décrit un procédé de détection d'anomalies basé sur un enregistrement continu de la variation de pression à partir du capteur de pression pendant le remplissage de l'organe d'aspiration et une extrapolation de la valeur de pression à partir des mesures de la variation de pression enregistrées. Ainsi avec un tel procédé les bornes d'une zone de tolérance de pression sont calculées à chaque instant à partir à la fois de la dernière valeur de pression mesurée par le capteur de pression et de la variation instantanée de pression mesurée, la sortie de la pression mesurée de cette zone de tolérance étant interprétée comme une anomalie du remplissage du dispositif de dosage.

Un tel procédé permet donc une détection d'anomalies quel que soit le volume voulu de liquide à doser sans nécessiter un étalonnage en pression préalable du dispositif de dosage à ce même volume. Néanmoins, un tel procédé présente le désavantage de ne fonctionner que pendant la phase de montée de la dépression correspondant à l'actionnement du moyen de remplissage, ce procédé n'étant pas fonctionnel dans la phase de relaxation de la dépression, dite phase de relaxation, qui suit. De plus, un tel procédé ne permet pas de détecter un décalage graduel de la courbe de variation de la pression qui peut avoir pour origine, par exemple, une vitesse trop faible des moyens de remplissage.

## EXPOSÉ DE L'INVENTION

La présente invention vise à remédier à ces inconvénients.

Un des buts de l'invention est donc de fournir un procédé de détection d'anomalies lors du remplissage d'un dispositif de dosage de liquide par un liquide à doser, ledit procédé étant adapté pour la détection d'anomalies lors du remplissage d'un dispositif de dosage de liquide avec un volume quelconque de liquide à doser sans nécessiter un nouvel étalonnage en pression préalable à ce même volume quelconque de liquide à doser, le procédé étant actif au moins pendant la phase de relaxation qui suit la phase de montée de la dépression correspondant à l'actionnement du moyen de remplissage.

Un autre but de l'invention est de fournir un procédé de détection d'anomalies lors du remplissage d'un dispositif de dosage de liquide par un liquide à doser, ledit procédé étant adapté pour la détection d'anomalies à un grand nombre de volume de liquide à doser avec un nombre réduit d'étapes d'étalonnage en pression préalables, le procédé étant actif au moins pendant la phase de relaxation qui suit la phase de montée de la dépression correspondant à l'actionnement du moyen de remplissage.

A cet effet, l'invention concerne un procédé de détection d'anomalies lors du remplissage d'un dispositif de dosage de liquide par un liquide à doser, ledit dispositif comprenant:

- au moins un organe d'aspiration destiné à être en contact avec le liquide à doser et à en contenir lors du remplissage du dispositif de dosage,
- au moins un moyen de remplissage agencé pour remplir de façon automatisée l'organe d'aspiration, ledit moyen de remplissage comprenant au moins une zone en communication avec l'organe d'aspiration, ladite zone contenant un gaz,

- et au moins un moyen de contrôle de pression agencé pour mesurer la pression dans la zone du moyen de remplissage ou dans une zone de l'organe d'aspiration contenant un gaz,
  le procédé de détection comportant les étapes consistant à :

- a) faire un étalonnage en pression préalable du remplissage du dispositif de dosage, cet étalonnage en pression étant réalisé à au moins deux volumes de référence de manière à définir pour chacun des au moins deux volumes de référence une courbe de remplissage de référence,
- b) définir un volume voulu de liquide à doser,
- c) calculer pour le volume voulu une zone de tolérance présentant une limite haute et une limite basse, les limites haute et basse de la zone de tolérance étant calculées à partir des courbes de remplissage de référence,
- d) remplir l'organe d'aspiration avec le liquide à doser pendant un temps *dt,*
- e) mesurer la pression à partir du moyen de contrôle de la pression,
- f) vérifier si la pression est comprise dans la zone de tolérance et si la pression est dans la zone de tolérance revenir à l'étape d) jusqu'à ce qu'un temps de remplissage correspondant au volume voulu de liquide à doser soit atteint,
- g) si la pression est en dehors de la zone de tolérance, indiquer qu'une anomalie est détectée.

Un tel procédé permet, avec un étalonnage en pression à un nombre réduit de volumes de référence, pouvant être égal à deux, de détecter une anomalie à un volume quelconque de liquide à doser.

Dans ce procédé l'étape d) et l'étape e) peuvent être aussi bien successives, que simultanées ou inversées.

Le procédé peut comprendre en outre une étape h) consistant à calculer, à partir des pressions mesurées durant le remplissage du dispositif de dosage, le volume de liquide à doser dans l'organe d'aspiration et une étape i) consistant à, si la différence entre le volume voulu et le volume de liquide à doser calculé est supérieure, en valeur absolue, à une valeur seuil, indiquer qu'une anomalie est détectée.

De tels étapes permettent une vérification supplémentaire du bon remplissage du dispositif de dosage et donc du bon dosage du liquide à doser.

L'étape c) peut comprendre une étape c') consistant à calculer une courbe de remplissage calculée pour le volume voulu à partir des courbes de remplissage de référence, et une étape c'') lors de laquelle le calcul des limites haute et basse de la zone de tolérance comporte une étape de calcul consistant pour la limite haute et la limite basse à faire respectivement, une soustraction et une addition à la courbe de remplissage calculée d'une valeur de pression $\Delta P$.

On entend par calculer à partir des courbes de remplissage de référence aussi bien le fait de calculer à partir des courbes de remplissage de référence en elles-mêmes, que le fait de calculer à partir de valeurs caractéristiques de ces mêmes courbes de remplissage de référence ou le fait de calculer à la fois à partir des courbes de remplissage de référence et de certaines de leurs valeurs caractéristiques.

De tels étapes c') et c") permettent un calcul d'une zone de tolérance optimisée pour le volume voulu de liquide à doser, cette zone de tolérance étant calculée à partir à la fois d'une courbe de remplissage calculée pour ledit volume voulu et d'une de valeur de pression $\Delta P$ de tolérance.

L'étape c) peut comprendre une étape c') consistant à calculer une courbe de remplissage calculée pour le volume donné à partir des courbes de remplissage de référence, et une étape c''') lors de laquelle le calcul des limites haute et basse de la zone de tolérance comporte une étape de calcul consistant, pour la limite haute et la limite basse, à faire respectivement un décalage temporel positif et négatif d'une valeur de temps $\Delta t$.

De tels étapes c') et c''') permettent d'obtenir une zone de tolérance optimisée pour le volume voulu de liquide à doser, cette zone de tolérance étant calculée à partir à la fois d'une courbe de remplissage calculée pour ledit volume voulu et d'un décalage temporel d'une valeur de temps $\Delta t$.

L'étape a) peut comprendre une étape a') consistant à enregistrer des valeurs de pression mesurées à partir du moyen de contrôle de la pression pendant le remplissage de l'organe d'aspiration par un volume de référence de liquide et une étape a") consistant à déterminer la courbe de remplissage correspondant à la courbe de pression obtenue à l'étape a'), cette étape a") pouvant également consister à déterminer des valeurs caractéristiques correspondant à cette même courbe de pression, les étapes a') et a") étant réalisées pour chacun des volumes de référence.

De telles étapes permettent la détermination de valeurs caractéristiques pour chacun des volumes de référence facilitant ainsi le traitement des courbes de référence pour le calcul de la zone de tolérance.

Les valeurs caractéristique de la courbe de pression déterminées pendant l'étape a") peuvent comprendre au moins une valeur caractéristique sélectionnée dans le groupe comportant :

- une valeur de dépression maximum $P_{max}$ correspondant à la valeur de dépression maximum atteinte lors du remplissage,
- un temps d'atteinte de la dépression maximum $t_{max}$ correspondant au temps auquel est atteinte la dépression maximum,
- une dépression résiduelle $P_a$, correspondant à la dépression résiduelle après le remplissage du dispositif de dosage,
- et un temps caractéristique $\tau$ représentatif de la vitesse de décroissance de la dépression après que la dépression $P_{max}$ a été atteinte.

De telles valeurs caractéristiques permettent de caractériser au mieux les courbes de variation de pression pour chacun des volumes de référence. Ces mêmes valeurs peuvent également permettre, lorsqu'elles sont calculées pour un volume voulu de liquide à doser, de déterminer une courbe de remplissage théorique pour ce même volume voulu de liquide à doser.

L'étape c') peut comprendre une étape consistant à interpoler linéairement la courbe de remplissage et/ou des valeurs caractéristiques de la courbe de remplissage au volume voulu à partir d'au moins deux courbes de remplissage des volumes de référence et/ou des valeurs caractéristiques des courbes de pression d'au moins deux volumes de référence.

Une telle courbe de remplissage au volume voulu et/ou de telles valeurs caractéristiques de la courbe de remplissage au volume voulu, permettant le calcul d'une courbe de remplissage à ce même volume, permettent de définir et/ou d'obtenir une courbe de remplissage calculée à partir des courbes de remplissage de référence et/ou des valeurs caractéristiques de ces mêmes courbes se rapprochant sensiblement d'une courbe de remplissage qui pourrait être obtenue à partir d'une courbe de référence au volume voulu.

Selon un premier mode de réalisation du procédé, lors des l'étape c") et c''') les limites haute et basse de la zone de tolérance sont calculées à partir de la courbe de remplissage calculée en utilisant les formules suivante :

$$- \quad P_+(t) = P_{ref}(t) + \Delta P + \left| \frac{dP(t)}{dt} \right| \times \Delta t \ ,$$

$$- \quad P_-(t) = P_{ref}(t) - \Delta P - \left| \frac{dP(t)}{dt} \right| \times \Delta t \ ,$$

avec $P_+(t)$ et $P_-(t)$ les limites haute et basse de la zone de tolérance à l'instant t, $P_{ref}(t)$ la pression calculée à l'instant t à partir de la courbe de remplissage calculée et P(t) la variation de pression mesurée à l'instant t.

Selon une possibilité de l'invention le calcul de $\left|\dfrac{dP(t)}{dt}\right|$ peut être réalisé dans l'étape c''') en calculant la variation de P(t) entre l'instant t-dt et l'instant t en utilisant la formule suivante :

$$\left|\frac{dP(t)}{dt}\right| = \left|\frac{P(t) - P(t - dt)}{dt}\right|.$$

Selon une autre possibilité de l'invention, lors des l'étape c'') et c''') les limites haute et basse de la zone de tolérance peuvent être calculées à partir de la courbe de remplissage calculée en utilisant les formules suivante :

$$- \quad P_+(t) = P_{ref}(t) + \Delta P + \left|\frac{dP_{ref}(t)}{dt}\right| \times \Delta t \ ,$$

$$- \quad P_-(t) = P_{ref}(t) + \Delta P - \left|\frac{dP_{ref}(t)}{dt}\right| \times \Delta t \ ,$$

avec $P_+$ (t) et $P_-$ (t) les limites haute et basse de la zone de tolérance à l'instant t, $P_{ref}$ (t) la pression de calculée à l'instant t à partir de la courbe de remplissage calculée.

De telles formules, pour le calcul de la limite haute et de la limite basse, permettent de définir les limites de la zone de tolérance en prenant en compte à la fois d'une tolérance sur une avance ou un retard de phase des moyens de remplissage et d'une tolérance sur les erreurs de mesure de pression.

Selon une variante de l'invention le procédé comprend en outre, entre les étapes c) et d), une étape c*) consistant à faire fonctionner les moyens de remplissage pendant le temps $t_{max}$ calculé pour le volume voulu.

Un tel temps de remplissage permet d'obtenir l'actionnement du moyen de remplissage nécessaire pour remplir le dispositif de dosage au volume de liquide voulu.

Selon un autre mode de réalisation du procédé, les courbes de remplissage de référence et calculée peuvent être les courbes de variation de pression après le temps $t_{max}$ correspondant.

De telles courbes de remplissage permettent une détection d'erreur lors du remplissage du dispositif de dosage sur la période de remplissage post-actionnement des moyens de remplissage.

Selon un autre mode de réalisation du procédé, les courbes de remplissage de référence et calculée sont les courbes de variation du facteur $P_{cor}$ après le temps $t_{max}$, le facteur $P_{cor}$ (t) étant égale à $\dfrac{P(t) - P_a}{P_{max} - P_a}$.

Un tel facteur $P_{cor}$ permet d'obtenir des courbes de référence présentant, pour la période post-actionnement du moyen de remplissage, une même valeur à l'origine des temps, la pression mesurée étant divisée par la valeur caractéristique de dépression $P_{max}$, et une même limite après complet remplissage du dispositif de dosage, la dépression résiduelle étant soustraite à la fois à la dépression mesurée au numérateur et à la pression $P_{max}$ au dénominateur.

Selon un autre mode de réalisation du procédé, les courbes de remplissage de référence et calculée peuvent être les courbes de variation du facteur $P'_{cor}$ après le temps $t_{max}$ en fonction d'une variable temporelle $t_{cor}$ le facteur $P'_{cor}(t_{cor})$ étant égale à $\dfrac{P(t_{cor}) - P_a}{P_{max} - P_a}$ et la variable temporelle $t_{cor}$ étant égale à $\dfrac{t - t_{max}}{\sqrt{P_{max} - P_a}}$.

Un tel facteur $P'_{cor}$ et une telle variable temporelle $t_{cor}$, permettent d'obtenir des courbes de remplissage similaires que ce soit pour les courbes de remplissage de référence et la courbe de remplissage calculée. Les faibles variations entre celles-ci permettent une meilleure précision quant à la détermination de la courbe de remplissage calculée.

Selon un autre mode de réalisation du procédé, les courbes de remplissage de référence et calculée sont les courbes de variation du facteur $P''_{cor}$ après le temps $t_{max}$ en fonction d'une variable temporelle $t_{cor}$ le facteur $P''_{cor}$ ($t_{cor}$)

étant égale à $\sqrt{\dfrac{P(t_{cor}) - P_a}{P_{max} - P_a}}$ et la variable temporelle $t_{cor}$ étant égale à $\dfrac{t - t_{max}}{\sqrt{P_{max} - P_a}}$ .

Un tel facteur $P''_{cor}$ et une telle variable temporelle $t_{cor}$ permettent de fournir des courbes de remplissage présentant une variation approximativement linéaire limitant ainsi le nombre de mesures pour déterminer le bon déroulement du remplissage, chaque courbe de remplissage possédant une valeur à l'origine de 1, il peut être considéré qu'une seule mesure est nécessaire pour vérifier le bon déroulement de l'ensemble du remplissage du dispositif de dosage.

L'invention se rapporte également à un dispositif de dosage de liquide adapté pour mettre en oeuvre un procédé selon l'invention, le dispositif comprenant :

- au moins un organe d'aspiration destiné à être en contact avec le liquide à doser et en contenir lors du remplissage du dispositif de dosage,
- au moins un moyen de remplissage agencé pour remplir de façon automatisée l'organe d'aspiration, ledit moyen de remplissage comprenant au moins une zone en communication avec l'organe d'aspiration, ladite zone contenant un gaz,
- au moins un moyen de contrôle de la pression agencé pour enregistrer la pression dans la zone du moyen de remplissage ou dans une zone de l'organe d'aspiration contenant un gaz,
- un moyen d'avertissement adapté pour indiquer la présence d'une anomalie
- des moyens de commande et de calcul agencés pour commander le moyen de remplissage et au moins un moyen de contrôle de pression, les moyens de commande et de calcul étant adaptés pour réaliser un étalonnage en pression du remplissage du dispositif de dosage à au moins deux volumes de référence et définir pour chacun des au moins deux volumes une courbe de référence, pour calculer les limites haute et basse de la zone de tolérance pour le volume voulu à partir des courbes de référence et pour vérifier si la pression reste dans ladite zone de tolérance lors du remplissage, lesdits moyens de commande et de calcul étant en outre agencés pour communiquer avec le moyen d'avertissement.

Un tel dispositif permet de fournir un dosage qualifié d'un liquide puisque l'étape de remplissage par ledit liquide à doser peut être surveillée par la mise en oeuvre d'un procédé détection d'anomalies.

Le dispositif de dosage peut mettre également en oeuvre un procédé de détection d'anomalies lors de la libération du liquide à doser.

Un tel dispositif permet d'assurer que la totalité du liquide présent dans l'organe d'aspiration est libérée, cette libération étant contrôlée par la mise en oeuvre d'un procédé de détection d'anomalies lors de la libération du liquide à doser.

## BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :

- la figure 1 illustre un exemple de dispositif de dosage de liquide adapté pour la mise en oeuvre d'un procédé de détection d'anomalies selon l'invention,
- la figure 2 illustre des courbes de variation de pression à différents volumes d'un dispositif de dosage,
- la figure 3 est un organigramme simplifié explicitant les différentes étapes de mise en oeuvre d'un procédé de détection d'anomalies lors du remplissage d'un dispositif de dosage de liquide par un liquide à doser,
- la figure 4 est un organigramme complet explicitant les différentes étapes de mise en oeuvre d'un procédé de détection d'anomalies lors du remplissage d'un dispositif de dosage de liquide par un liquide à doser,
- la figure 5 illustre un exemple de courbe de variation de pression pour un remplissage réussi obtenue lors de la mise en oeuvre d'un procédé de détection d'anomalies lors du remplissage d'un dispositif selon l'invention,
- la figure 6 illustre un exemple de courbe de variation de pression pour un remplissage présentant une anomalie obtenue lors de la mise en oeuvre d'un procédé de détection d'anomalies lors du remplissage d'un dispositif selon l'invention,
- la figure 7 illustre des courbes de remplissage dont la variable temporelle est une variable temporelle corrigée de la valeur $t_{max}$,
- la figure 8 est un organigramme complet explicitant les différentes étapes de mise en oeuvre d'un procédé de détection d'anomalies selon une possibilité de l'invention dans laquelle le procédé comprend une étape c*) consistant à actionner le moyen de remplissage pendant le temps $t_{max}$ calculé pour le volume voulu,

- la figure 9 illustre des courbes de remplissage du facteur corrigé $P_{cor}$ après le temps $t_{max}$,
- la figure 10 illustre des courbes de remplissage du facteur corrigé $P'_{cor}$ en fonction de la variable temporelle $t_{cor}$,
- la figure 11 illustre des courbes de remplissage du facteur corrigé $P''_{cor}$ en fonction de la variable temporelle $t_{cor}$,
- la figure 12 illustre des courbes de libération d'un liquide à doser par un dispositif de dosage pour différents volumes de liquide,
- la figure 13 est un organigramme complet explicitant les différentes étapes de mise en oeuvre d'un procédé de détection d'anomalies lors de libération du liquide à doser.

Les différentes parties représentées sur les figures ne le sont pas nécessairement selon une échelle uniforme, pour rendre les figures plus lisibles.

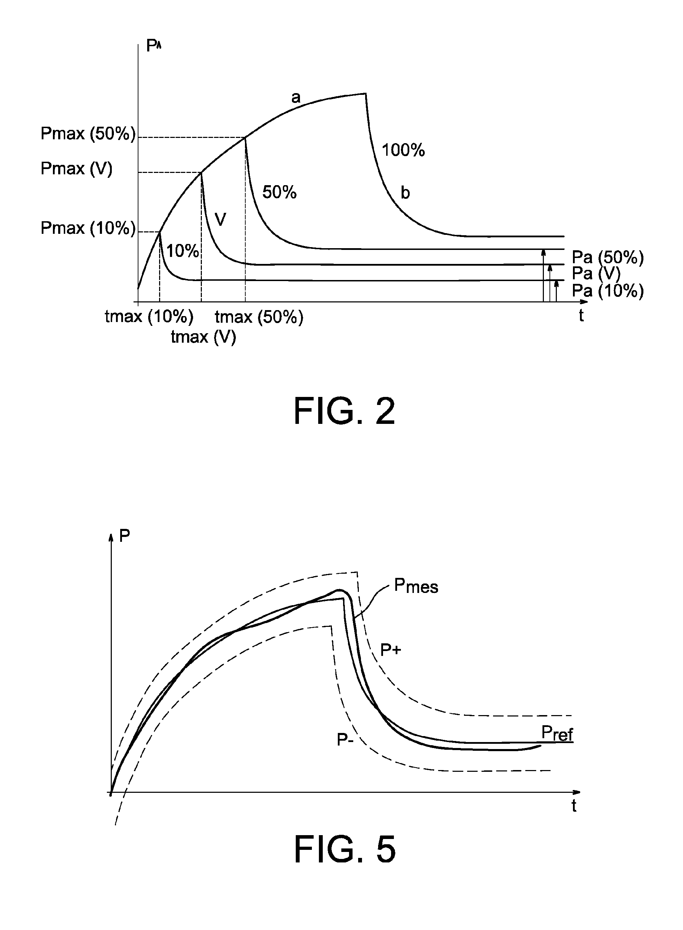

Par convention, dans l'ensemble des graphiques présentés aux figures 2, 5, 6, 7 et 12 les courbes représentent des variations de pression illustrant la dépression présente dans la chambre d'aspiration du moyen de remplissage, une valeur positive correspond donc à une dépression dans la chambre d'aspiration et une valeur négative à une surpression, l'origine des pressions correspondant à la pression atmosphérique.

## EXPOSÉ DÉTAILLÉ DE MODES DE RÉALISATION PARTICULIERS

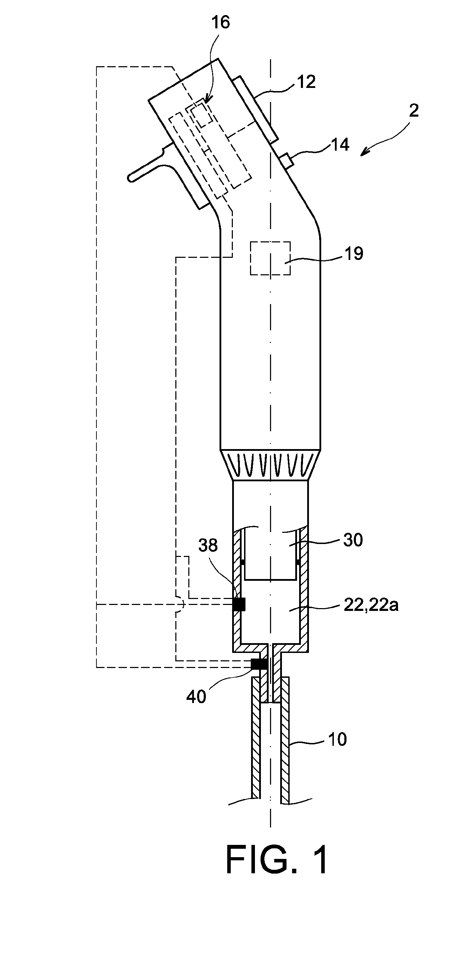

La figure 1 illustre une pipette 2 automatisée adaptée pour la mise en oeuvre d'un procédé de détection d'anomalies lors du remplissage de la pipette 2 par un liquide à doser.

Une telle pipette 2 comporte :

- une chambre d'aspiration 22 présentant une zone de gaz 22a,
- un cône d'aspiration 10 en communication avec la chambre d'aspiration 22 et formant un organe d'aspiration, le dit cône d'aspiration 10 étant destiné à contenir le liquide à doser et étant généralement un cône d'aspiration 10 amovible et à usage unique,
- un piston 30 motorisé dans la chambre d'aspiration 22 adapté pour remplir le cône d'aspiration 10 avec le liquide à doser, ce piston 30 formant avec la chambre d'aspiration 22 un moyen de remplissage automatisé,
- un capteur de pression 38 agencé pour enregistrer la pression dans la zone de gaz 22a et formant un moyen de contrôle de la pression,
- un écran 12 formant un moyen d'avertissement,
- un système de traitement 16 en communication avec le capteur de pression 38 et adapté pour commander le moteur 19 actionnant le piston 30 et l'affichage de l'écran 12, ledit système formant des moyens de commande et de calcul.

Une telle pipette 2 étant similaire, si ce n'est la programmation du système de traitement, à une pipette 2 mettant en oeuvre une mesure de viscosité, une description complète est disponible dans le document FR 2927999, les références de la figure 1 étant identiques à celles dudit document afin de faciliter le passage de la présente description au document FR 2927999.

Il est également à noter que si la pipette 2 illustrée sur la figure 1 présente un deuxième capteur de pression 40 au niveau du cône d'aspiration 10 pour mesurer la pression atmosphérique, le deuxième capteur de pression 40 n'est pas nécessaire pour l'invention et est présent dans le seul but d'également permettre une mesure de la viscosité du liquide à doser.

Avec une telle pipette 2, lors du remplissage du cône d'aspiration 10 par un volume de liquide à doser, le capteur de pression 38 va permettre de surveiller les valeurs de pression dans la zone de gaz 22a.

La figure 2 illustre des courbes de variation de pression en fonction du temps obtenues pour différents volumes de liquide à doser. Les volumes de liquide à doser, mis à part le volume V illustrant la possibilité de fonctionnement de la pipette pour un volume quelconque de liquide à doser, sont exprimés en pourcentage de la capacité nominale de la pipette 2. Ainsi sur la figure 2, les volumes de liquide présentés sont 10%, 50% et 100% de la capacité nominale de la pipette 2.

On peut voir sur ces courbes que la variation de pression présente, pour chacun des volumes précités, une variation de pression similaire avec deux phases de remplissage différentes :

- une première phase a) de montée de la dépression correspondant à l'actionnement du piston 30 et
- une seconde phase b) de relaxation de la dépression correspondant à l'aspiration du liquide à doser après la fin de l'actionnement du piston 30.

La figure 2 montre que, pendant la première phase, la variation de la pression est sensiblement identique pour chacun des volumes, la différence étant la valeur de dépression maximum $P_{max}$ et le temps $t_{max}$ auquel cette valeur de dépression maximum $P_{max}$ est atteinte.

Ces deux valeurs, $P_{max}$ et $t_{max}$, sont donc des valeurs caractéristiques, pour cette première phase, du volume de liquide à doser.

La seconde phase, correspondant à la relaxation de la dépression, comme illustré sur la figure 2, est une phase pendant laquelle, après la fin de l'actionnement du piston 30, le liquide continue à être aspiré jusqu'à qu'une dépression résiduelle $P_a$ soit atteinte. Cette dépression résiduelle $P_a$, variant avec le volume de liquide à doser, est une valeur caractéristique du volume de liquide à doser.

La mesure de la valeur $P_a$ est généralement réalisée en mesurant la variation de la pression dans la chambre d'aspiration 22 lors du remplissage de la pipette 2 à un volume donné et en définissant une valeur plancher de variation de pression à partir de laquelle la valeur de dépression atteinte est $P_a$. Ce seuil peut être, par exemple 1 mbar/s.

Pendant cette même seconde phase, la vitesse de relaxation de la pression peut être caractérisée par un temps caractéristique que l'on peut nommer $\tau$. Ce temps caractéristique $\tau$ peut être déterminé avec la formule suivante :

$$\tau = \frac{t - t_{max}}{1 - \sqrt{\left(\dfrac{P(t) - P_a}{P_{max} - P_a}\right)}}$$

Ce calcul peut être réalisé à tout instant pendant la phase de relaxation de la pression. Ainsi, pour en assurer une bonne précision, le calcul de ce temps caractéristique peut être réalisé par une moyenne à plusieurs instants t différents pendant la phase de relaxation de la dépression.

Ainsi à partir de ces différents paramètres $P_{max}$, $t_{max}$, $P_a$ et $\tau$, il est possible de calculer la courbe de variation de pression théorique correspondant à la seconde phase, ceci pour un volume de liquide donné. Cette équation est la suivante :

$$(1) \qquad P_{ref}(t) = \left[P_{max} - P_a\right] \times \left(1 - \frac{t - t_{max}}{\tau}\right)^2 + P_a$$

La variation de pression pendant la première phase de remplissage étant sensiblement identique quel que soit le volume de liquide à doser, la courbe de variation de la pression théorique pendant la seconde phase pouvant être connue et le temps de passage d'une phase à l'autre étant également connu, la connaissance des différents paramètres caractéristiques à un volume donné permet donc de reconstituer une courbe de pression correspondant à ce volume donné.

Il est possible de déterminer avec une précision suffisante les valeurs caractéristiques pour un volume donné en réalisant une extrapolation linéaire à partir des valeurs caractéristiques aux volumes de référence.

Ainsi, les valeurs caractéristiques $P_{max}$, $t_{max}$ et $P_a$ pour un volume V peuvent être déterminées selon cette procédure et avec les équations suivantes :

$$(2) \qquad P_{max} = P_{max\_V2}\,\frac{V - V_1}{V_2 - V_1} - P_{max\_V1}\,\frac{V - V_2}{V_2 - V_1}\,,$$

$$(3) \qquad t_{max} = t_{max\_V2}\,\frac{V - V_1}{V_2 - V_1} - t_{max\_V1}\,\frac{V - V_2}{V_2 - V_1}\,,$$

$$(4) \qquad P_a = P_{a\_V2}\,\frac{V - V_1}{V_2 - V_1} - P_{a\_V1}\,\frac{V - V_2}{V_2 - V_1}\,,$$

avec $V_1$ et $V_2$ des volumes de référence pour lesquels les valeurs caractéristiques sont connues, $P_{max\_V1}$ et $P_{max\_V2}$ les dépressions maximales de respectivement $V_1$ et $V_2$, $tmax_{\_V1}$ et $t_{max\_V2}$ les temps $t_{max}$ auquel les valeurs de dépression maximum sont atteintes pour respectivement $V_1$ et $V_2$ et $P_{a\_V1}$ et $P_{a\_V2}$ les dépressions résiduelles de *respectivement $V_1$ et $V_2$*

Ces valeurs $V_1$ et $V_2$ sont pour ces équations, et pour l'ensemble des équations suivantes les utilisant, préférentiellement choisies de manière à encadrer la valeur de volume voulu, c'est-à-dire que V, V1 et V2 respectent l'inégalité suivante :

$$V_1 < V < V_2$$

Dans le cas où plusieurs volumes de référence, pour lesquels les valeurs caractéristiques sont connues, sont accessibles, les volumes $V_1$ et $V_2$ sont préférentiellement choisis comme étant respectivement le volume de référence directement inférieur au volume de liquide $V$ et le volume de référence directement supérieur. Par exemple, dans le cas illustré sur la figure 2, le volume $V_1$ correspond à 10% de la capacité nominale de la pipette 2 et le volume $V_2$ correspond à 50% de la capacité nominale de la pipette 2.

Pour le temps caractéristique $\tau$, une simple extrapolation linéaire ne permet pas d'obtenir une précision suffisante, il est nécessaire d'utiliser une équation plus complexe qui est la suivante :

$$(5) \qquad \tau = \frac{\sqrt{P_{max} - P_a}}{V_2 - V_1}\left(\frac{\tau_{V2}(V - V_1)}{\sqrt{P_{max\_V2} - P_{a\_V2}}} - \frac{\tau_{V_1}(V - V_2)}{\sqrt{P_{max\_V1} - P_{a\_V1}}}\right)$$

avec $\tau_{V1}$ et $\tau_{V1}$ les temps caractéristiques de respectivement $V_1$ et $V_2$.

Ces différentes équations permettent donc, à partir de valeurs caractéristiques de deux volumes de référence de la pipette 2 automatisée, de calculer les valeurs caractéristiques, et donc d'obtenir la variation théorique de pression pour le remplissage de la pipette 2 automatisée, quel que soit le volume voulu de liquide à doser.

A partir des courbes de pression, il est également possible de déterminer la valeur caractéristique S qui est caractéristique du rapport entre le volume de liquide présent dans le cône d'aspiration 10 après remplissage et l'intégrale de la racine de la variation de pression pendant le remplissage de la pipette 2.

Cette valeur caractéristique peut être calculée à partir de l'équation suivante :

$$S(V) = \frac{\sqrt{\frac{\rho}{2}}V}{\int_0^{t\,max}\sqrt{P(t)}dt + \int_{t\,max}^{t\,max+\tau}\sqrt{P(t) - P_a}dt}$$

avec p la viscosité du liquide.

Ce paramètre peut donc permettre, pour un volume donné de liquide à doser, de vérifier que la variation de pression pendant le remplissage de la pipette 2 est en concordance avec le volume donné à doser, et donc de vérifier si le volume de liquide à doser présent dans le cône d'aspiration 10est bien celui attendu.

En effet, d'après l'équation ci-dessus le volume de liquide remplissant le cône d'aspiration 10 après le remplissage est égal à :

$$V_{cal} = S\sqrt{\frac{2}{\rho}}\left(\int_0^{t\,max}\sqrt{P(t)}dt + \int_{t\,max}^{t\,max+\tau}\sqrt{P(t) - P_a}dt\right)$$

Ce volume $V_{cal}$ peut aisément être comparé au volume de liquide à doser.

De même que pour les valeurs caractéristiques $P_{max}$, $t_{max}$ et $P_a$, il est possible de déterminer la valeur de $S$ à un volume donné en faisant une extrapolation linéaire selon l'équation suivante :

$$(6) \qquad S = S_{V2}\frac{V - V_1}{V_2 - V_1} - S_{V1}\frac{V - V_2}{V_2 - V_1}$$

avec $S_{V1}$ et $S_{V2}$ les valeurs caractéristiques S pour respectivement le volume de référence $V_1$ et pour le volume de référence $V_2$.

Ainsi, l'ensemble ou certaines des valeurs caractéristiques $P_{max}$, $t_{max}$, $P_a$, $\tau$ et $S$ peuvent être calculées pour un volume quelconque de liquide à doser et être utilisées pour détecter une anomalie lors du remplissage de la pipette 2 par ledit volume de liquide à doser.

Le système de traitement 16 de la pipette 2 est adapté pour mettre en oeuvre ce principe lors de la mise en oeuvre d'un procédé de détection d'une anomalie lors du remplissage de la pipette 2.

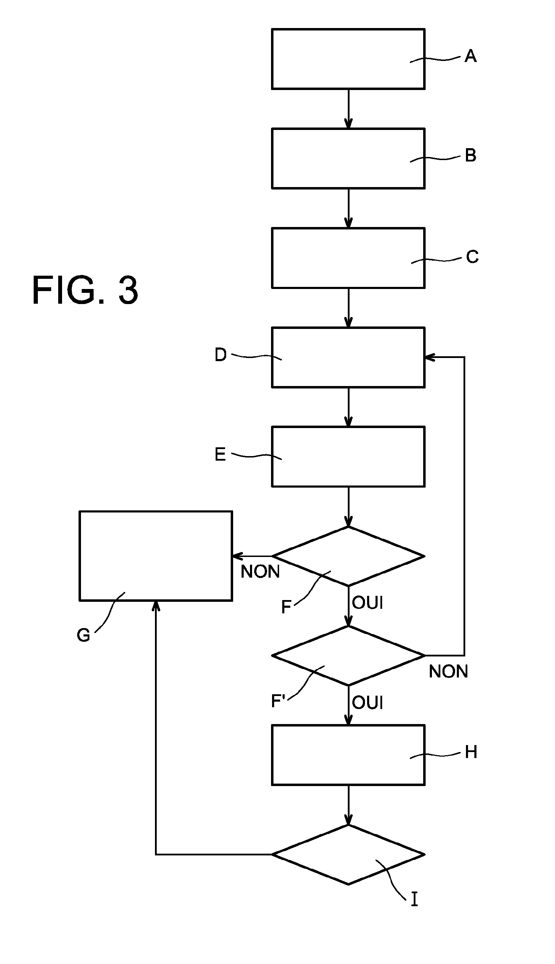

La figure 3 est organigramme présentant les principales étapes d'un tel procédé. Un tel procédé comprend les étapes consistant à :

A) faire un étalonnage en pression préalable du remplissage de la pipette 2, cet étalonnage en pression étant réalisé à au moins deux volumes de référence de manière à déterminer une courbe de remplissage et au moins une partie des valeurs caractéristiques $P_{max}$, $t_{max}$, $P_a$, $\tau$ et $S$ pour chacun de ces au moins deux volumes,

B) définir par l'utilisateur un volume voulu de liquide à doser,

C) calculer pour le volume voulu une zone de tolérance présentant une limite haute et une limite basse, les limites haute et basse de la zone de tolérance étant calculées à partir des valeurs caractéristiques et/ou pour les volumes de référence obtenus à l'étape A),

D) remplir le cône d'aspiration 10 avec le liquide à doser pendant un temps *dt,*

E) mesurer la pression à partir du capteur de pression 38 de la pression de la zone d'air 22a,

F) vérifier si la pression est comprise dans la zone de tolérance,

F') vérifier si t est supérieur ou égal au temps de remplissage correspondant au volume voulu,

G) indiquer sur l'écran 12 qu'une anomalie est détectée,

H) calculer le volume de liquide à doser présent dans le cône d'aspiration,

I) vérifier si la différence entre le volume de liquide à doser calculé et le volume voulu est supérieure en valeur absolue à une valeur seuil.

Dans un premier mode de réalisation de la pipette 2, le système de traitement 16 est adapté pour traiter des courbes de remplissage correspondant à des courbes de variation de pression pendant le remplissage de la pipette 2.

Selon ce mode de réalisation, l'étape A) d'étalonnage en pression permet pour au moins deux volumes de référence, de déterminer les courbes de variation de pression de référence, ces courbes faisant office de courbes de remplissage. Lors de cette étape l'un des volumes de référence est préférentiellement le volume correspondant à la capacité nominale de la pipette 2.

Lors de cette même étape le système de traitement traite les courbes de remplissage de référence afin de déterminer pour chacun des volumes de référence des valeurs caractéristique $P_{max}$, $t_{max}$, $P_a$, $\tau$ et $S$ à ces volumes de référence.

Ces valeurs caractéristiques enregistrées, la pipette 2 peut être utilisée avec un volume quelconque de liquide à doser. En effet les équations (2), (3), (4), (5) et (6), permettent, à partir des valeurs caractéristiques des volumes de référence d'extrapoler les valeurs caractéristiques correspondant quel que soit le volume de liquide à doser.

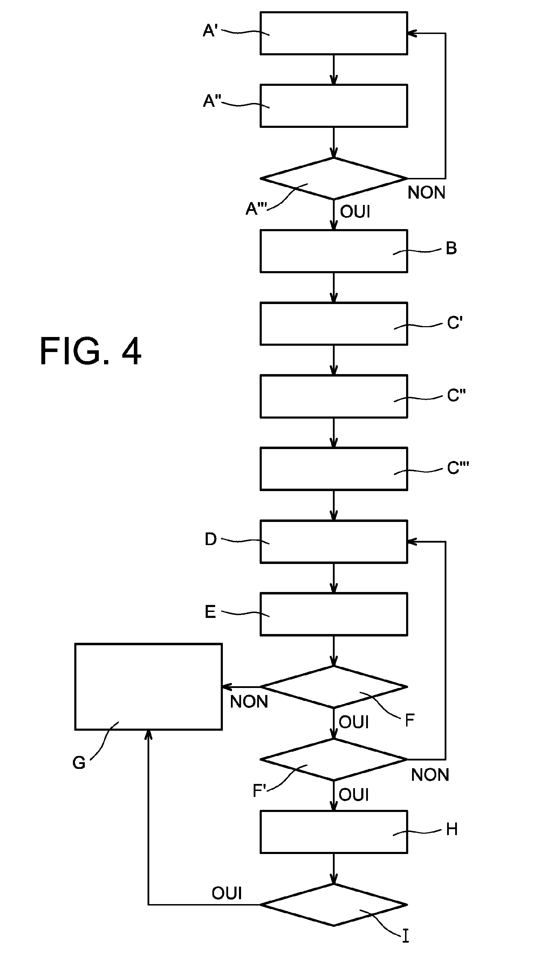

Ainsi dans ce mode de réalisation, comme illustré par l'organigramme présent à la figure 4, l'étape A) comprend les sous-étapes A'), A") et A''') consistant à :

A') enregistrer les valeurs de pression mesurées à partir du capteur de pression 38 pendant le remplissage du cône d'aspiration 10 par un volume de référence de liquide, ceci de manière à définir une courbe de variation de pression pour ce volume de référence,

A") déterminer les valeurs caractéristiques $P_{max}$, $t_{max}$, $P_a$, $\tau$ et $S$ correspondant à la courbe de variation de pression, c'est-à-dire la courbe de référence, obtenue pour le volume de référence,

A''') vérifier si la pipette 2 est calibrée à tous les volumes de référence.

Dans ce mode de réalisation, l'étape C) de calcul de la zone de tolérance comprend les sous-étapes consistant à :

C') calculer les différentes valeurs caractéristiques $P_{max}$, $t_{max}$, $P_a$, $\tau$ au volume voulu,

C") calculer la courbe de remplissage calculée $P_{ref}(t)$ à partir de ces valeurs calculées au volume voulu et de la courbe de pression pour le volume correspondant à la capacité nominale de la pipette 2, et

C''') calculer les limite haute et basse de la zone de tolérance à partir de la courbe de remplissage calculée $P_{ref}(t)$.

L'étape C') est réalisée, comme précédemment indiqué, à partir des valeurs caractéristiques au volume de référence, ces valeurs caractéristiques ayant été calculées, lors de l'étape A"), à partir de la courbe de remplissage au volume de référence correspondant, et des équations (2), (3), (4), (5) et (6).

Le calcul de la courbe de remplissage, lors de l'étape C"), est réalisé en deux temps. La première phase, entre 0 et $t_{max}$, reprend, comme illustré sur la figure 2, la partie de courbe de montée de pression correspondant à la capacité nominale de la pipette 2 comprise entre ces deux temps. La seconde phase, entre $t_{max}$ et un temps supérieur à $\tau$, est calculée à partir de l'équation (1)

Le calcul des limites haute $P_+(t)$ et basse $P_-(t)$ de la zone de tolérance, lors de l'étape C"') est réalisé à partir des équations suivantes :

$$(7) \qquad P_+(t) = P_{ref}(t) + \Delta P + \left| \frac{P_{mes}(t) - P_{mes}(t - dt)}{dt} \right| \times \Delta t$$

$$(8) \qquad P_-(t) = P_{ref}(t) - \Delta P - \left| \frac{P_{mes}(t) - P_{mes}(t - dt)}{dt} \right| \times \Delta t$$

avec $\Delta P$ et $\Delta t$ les écarts de tolérance définis par le constructeur et $dt$ le pas de temps entre deux mesures de pression.

Selon une possibilité de l'invension, les limites haute $P_+(t)$ et basse $P_-(t)$ peuvent également être calculées à partir de la pression calculée. Dans ce mode de réalisation, une telle possibilité peut être obtenue à partir des équations suivantes :

$$P_+(t) = P_{ref}(t) + \Delta P + \left| \frac{P_{ref}(t) - P_{ref}(t - dt)}{dt} \right| \times \Delta t$$

$$P_-(t) = P_{ref}(t) - \Delta P - \left| \frac{P_{ref}(t) - P_{ref}(t - dt)}{dt} \right| \times \Delta t$$

Ainsi, la mise en oeuvre de la pipette 2 par un utilisateur lors du dosage d'un volume quelconque de liquide à doser consiste à faire une étape d'étalonnage en pression préalable de la pipette 2 à un nombre de volumes de référence au moins égal à deux et comportant, de préférence, le volume correspondant à la capacité nominale de la pipette 2 . Cette étape d'étalonnage en pression peut être réalisée avec le liquide à doser ou un liquide de référence, présentant préférentiellement la même viscosité que le liquide à doser. La pipette 2 est ensuite utilisée de manière classique à une pipette automatisée, c'est-à-dire que l'utilisateur effectue les étapes consistant à :

- régler la pipette 2 avec le volume de liquide à doser,
- mettre le cône d'aspiration 10 en contact avec le liquide à doser,
- actionner la pipette 2 de manière à ce que le système de traitement 16 commande le moyen de remplissage pour remplir le cône d'aspiration 10 et mettre en oeuvre le procédé de détection d'anomalies,
- vérifier si un avertissement est affiché à l'écran 12 indiquant qu'une anomalie c'est produite pendant le pipetage.

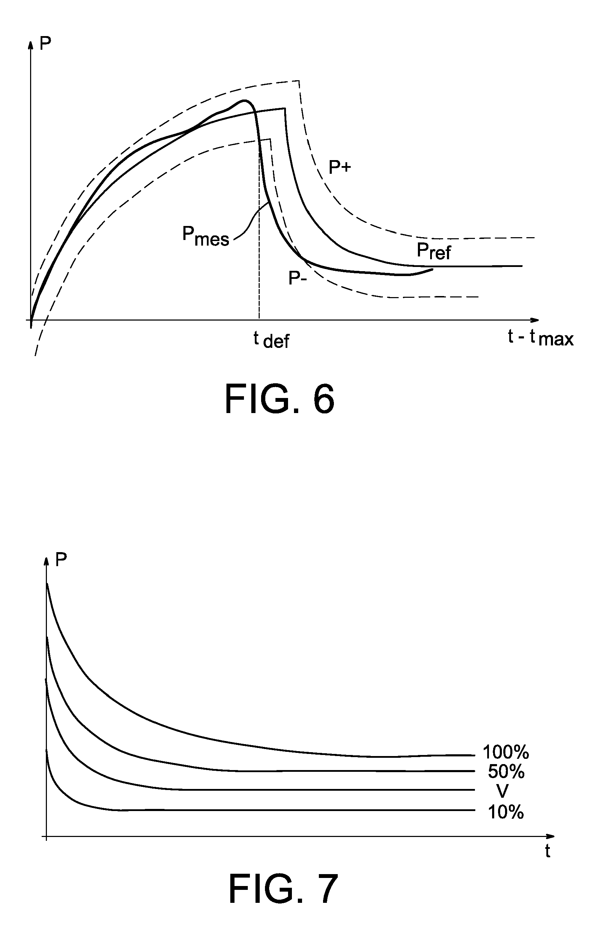

Les figures 5 et 6 sont des exemples de courbes de remplissage qui peuvent être obtenues lors d'une telle mise en oeuvre de la pipette 2 selon ce mode de réalisation. Ces figures présentent toutes deux, une courbe de remplissage calculée $P_{ref}$, la limite haute $P_+$ et basse $P$- de la zone de tolérance correspondant à la courbe de remplissage calculée et une courbe de remplissage mesurée $P_{mes}$ présentant respectivement, pour les figure 5 et 6, un remplissage réussi et défectueux.

Ainsi, on peut voir sur la figure 5 que lors du remplissage la pression, suivant la courbe de remplissage, reste en tout temps entre la limite haute et la limite basse de la zone de tolérance. Aucune anomalie n'est donc détectée.

Tandis que, sur la figure 6, lors du remplissage illustré, la pression $P_{mes}$, au temps $t_{def}$, n'est plus comprise dans la zone de tolérance. Le système de traitement 16 détecte donc une anomalie et indique à l'utilisateur que le remplissage est défectueux. Le système de traitement 16, en fonction de sa configuration peut, soit arrêter, comme illustré sur la figure 6, l'actionnement du piston 30 et donc le remplissage, soit le continuer.

Selon un deuxième mode de réalisation de l'invention, la courbe de remplissage peut être la courbe de pression, telle qu'illustrée sur la figure 7, après la fin de l'actionnement du piston 30, c'est-à-dire après que le temps $t_{max}$ est été atteint, la variable temporelle étant donc $t$-$t_{max}$.

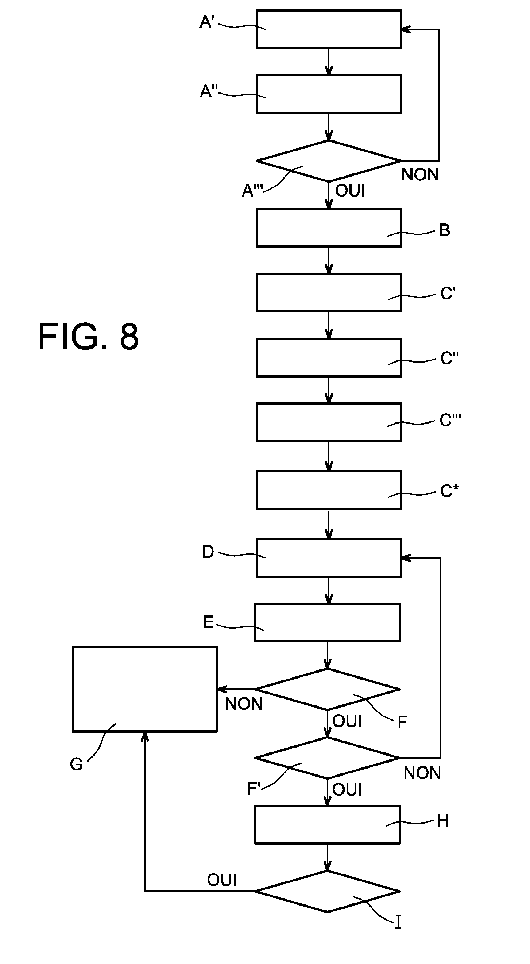

Un procédé selon un tel mode de réalisation se différencie d'un procédé selon le premier mode de réalisation en ce qu'il comprend, comme présenté sur l'organigramme de la figure 8, une étape C*) entre l'étape C"') et l'étape D) pendant laquelle le piston 30 est actionné, en ce que l'étape A") de détermination des valeurs caractéristiques consiste à au moins calculer les valeurs caractéristiques $t_{max}$, $S$ et la courbe de remplissage au volume de référence, et en ce que le calcul de la courbe de remplissage, réalisé à l'étape C"), est obtenu par une extrapolation linéaire à partir de deux courbes de remplissage de référence.

Ainsi dans ce mode de réalisation, chaque courbe de remplissage, telle qu'illustrée sur la figure 7, est une courbe de la variation de pression après $t_{max}$ qui présente, lorsqu'il n'y a pas d'anomalies, une variation selon l'équation (1).

Dans ce mode de réalisation, l'étape A") consiste à déterminer pour le volume de référence au moins les valeurs caractéristiques $t_{max}$ et S ainsi qu' à enregistrer la variation de pression $P(t\text{-}t_{max})$ lors de la seconde phase, c'est-à-dire après la fin de l'actionnement du piston 30. Dans cette étape la courbe de variation de pression $P(t\text{-}t_{max})$ lors de la seconde phase est la courbe de remplissage au volume de référence correspondant.

A l'étape C"), le calcul de la courbe de référence peut être réalisé en utilisant une extrapolation linaire à partir d'une formule du type :

$$(9) \qquad P_{ref}(t - t_{\max}) = \frac{V - V_1}{V_2 - V_1}\left(P_{V2}(t - t_{\max\_V2}) - P_{V1}(t - t_{\max\_V1})\right) + P_{V1}(t - t_{\max\_V1})$$

avec $P_{ref}$ la pression définissant la courbe de remplissage calculée pour le volume voulu, $t_{max}$ la valeur caractéristique calculée à partir de l'équation (3), $P_{V2}$ la pression définissant la courbe de remplissage du volume de référence $V_2$, $t_{max\_V2}$ la valeur caractéristique $t_{max}$ du volume de référence $V_2$, $P_{V1}$ la pression définissant la courbe de remplissage du volume de référence $V_1$ et $t_{max\_V1}$ la valeur caractéristique $t_{max}$ du volume de référence $V_1$.

Ce calcul, comme illustré sur la figure 7 permet une détermination approximative de la courbe de remplissage pour le volume voulu sans nécessiter le calcul des variables caractéristiques au volume voulu autres que $t_{max}$.

Le calcul des limites haute et basse de la zone de tolérance à l'étape C"') est réalisé à partir de la courbe de remplissage calculée pendant l'étape C") à partir des équations (7), (8) avec comme variable temporelle $t\text{-}t_{max}$.

Pendant l'étape C*), le piston 30 est actionné pendant le temps $t_{max}$ correspondant au volume voulu calculé à l'étape C") pour permettre d'atteindre la pression $P_{max}$ dans la chambre d'aspiration 22 et ainsi permettre de remplir le cône d'aspiration 10, après relaxation de la pression, avec le volume voulu de liquide à doser.

L'étape F) de vérification que la pression est présente dans la zone de tolérance et suit donc une variation sensiblement identique à la courbe de référence calculée, est réalisée après l'étape C*), c'est-à-dire à la fin de l'actionnement du piston 30 et avec un changement de l'origine des temps et donc un changement de variable temporelle, celle-ci étant dans ce mode de réalisation $t\text{-}t_{max}$.

En utilisation, la mise en oeuvre d'une pipette 2 selon ce mode de réalisation reste, pour l'utilisateur, similaire à celle d'une pipette 2 selon premier mode de réalisation.

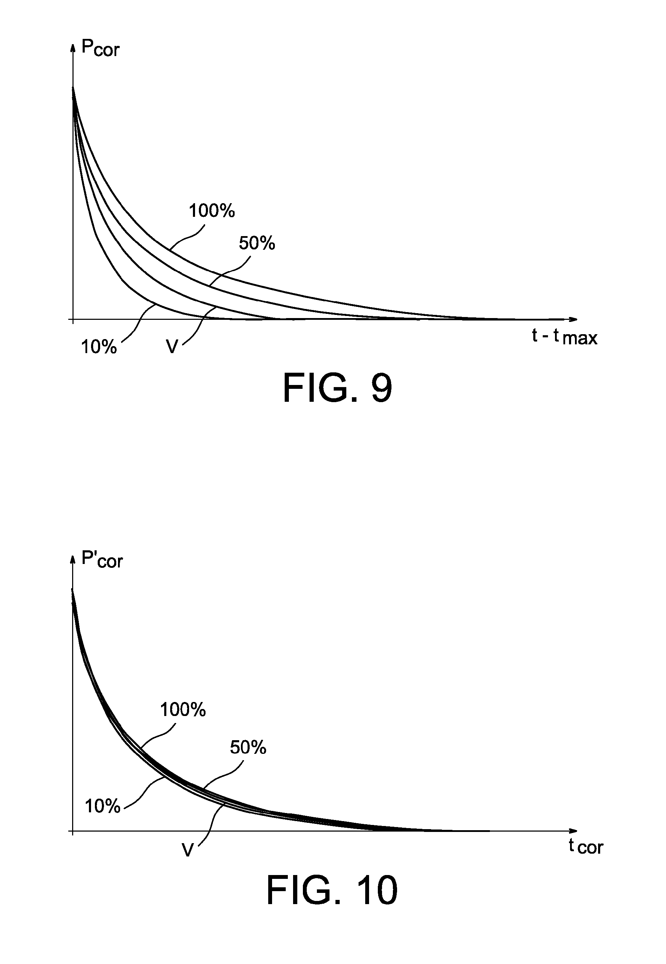

Selon un troisième mode de réalisation, chacune des courbes de remplissage peut être une courbe de la pression $P_{cor}$, telle qu'illustrée sur la figure 9, après actionnement du piston 30, c'est-à-dire après que le temps $t_{max}$ a été atteint, la variable temporelle étant donc $t\text{-}t_{max}$.

Une telle pression $P_{cor}$ est une pression obtenue avec l'équation suivante :

$$(10) \qquad P_{cor}(t) = \frac{P_{mes}(t) - P_a}{P_{\max} - P_a}$$

Ainsi, un procédé selon ce mode de réalisation, se différencie d'un procédé selon le deuxième mode de réalisation en ce que les courbes de remplissage de référence sont des courbes de pression $P_{cor}$ dont la variable temporelle est $t\text{-}t_{max}$ avec $t_{max}$ correspondant au volume de référence et en ce que l'étape A") de détermination des valeurs caractéristiques consiste à au moins calculer les valeurs caractéristiques $t_{max}$, $P_a$ et S.

Dans ce mode de réalisation de l'étape C"), le calcul de la courbe de remplissage calculée est réalisé selon un calcul similaire d'extrapolation linéaire à celui de l'équation (9) avec les pressions, que ce soit celles de référence et celle calculée, correspondant à un $P_{cor}$ selon l'équation (10). On obtient ainsi l'équation suivante :

$$P_{ref\_cor}(t - t_{\max}) = \frac{V - V_1}{V_2 - V_1}\left(P_{V2\_cor}(t - t_{\max\_V2}) - P_{V1\_cor}(t - t_{\max\_V1})\right) + P_{V1\_cor}(t - t_{\max\_V1})$$

avec $P_{ref\_cor}$ la pression corrigée calculée, $P_{V1\_cor}$ la pression corrigée au volume de référence $V_1$, $P_{V2\_cor}$ la pression corrigée au volume de référence $V_2$ et $t_{max}$ $v1$ et $t_{max\_V2}$ les valeurs caractéristique $t_{max}$ correspondant respectivement à $V_1$ et $V_2$.

De même lors de l'étape c''') de calcul des limites de la zone de tolérance, le calcul de ces limites est réalisé selon les équations (7) et (8) avec $Pref\,cor\,(t\text{-}tmax)$ et $P_{mes\_cor}\,(t\text{-}tmax)$ en lieu et place de respectivement $P_{ref}(t)$ et $P_{mes}\,(t)$.

En utilisation, la mise en oeuvre reste, pour l'utilisateur similaire à celle du premier mode de réalisation.

Selon un quatrième mode de réalisation du procédé, chacune des courbes de remplissage peut être une courbe de la pression $P'_{cor}$, telle qu'illustrée sur la figure 10, après actionnement du piston 30 et avec une variable temporelle $t_{cor}$

Une telle pression $P'_{cor}$ est une pression obtenue avec l'équation suivante :

$$P'_{cor}\left(t_{cor}\right) = \frac{P_{mes}\left(t_{cor}\right) - P_a}{P_{max} - P_a}$$

avec $\quad t_{cor} = \dfrac{t - t_{max}}{\sqrt{P_{max} - P_a}}\quad.$

Un procédé selon ce mode de réalisation se différencie d'une procédé selon le troisième mode de réalisation en ce que les courbes de remplissage de référence sont des courbes de pression $P'_{cor}$ dont la variable temporelle est $t_{cor}$ avec les valeurs caractéristiques correspondant au volume de référence et en ce que l'étape A'') de détermination des valeurs caractéristiques consiste à au moins calculer les valeurs caractéristiques $t_{max}$, $P_a$, $P_{max}$ et $S$.

Dans ce mode de réalisation, comme illustré par la figure 10, toutes les courbes de remplissage présentent une décroissance similaire. Ainsi, selon un principe identique à celui utilisé dans le quatrième mode de réalisation, et avec une précision accrue, lors de l'étape C''), le calcul de la courbe de remplissage calculée est réalisé à partir d'une extrapolation linéaire du même type que celle de l'équation (9). L'équation utilisée est la suivante :

$$P'_{ref\_cor}\left(t_{cor}\right) = \frac{V - V_1}{V_2 - V_1}\left(P'_{V2\_cor}\left(t_{cor}\right) - P'_{V1\_cor}\left(t_{cor}\right)\right) + P'_{V1\_cor}\left(t_{cor}\right)$$

avec $P'_{cal\_cor}$ la pression corrigée calculée, $P'_{V1\_cor}$ la pression corrigée au volume de référence $V_1$ et $P'_{V2\_cor}$ la pression corrigée au volume de référence $V_2$, les dépendances en $t_{cor}$ de $P'_{V1\_cor}$ et $P'_{V2\_cor}$ étant calculées à partir des valeurs caractéristiques au volume correspondant, c'est-à-dire que par exemple

$$P'_{V2\_cor}\left(t_{cor}\right) = P'_{V2\_cor}\left(\frac{t - t_{max\_V2}}{\sqrt{P_{max\_V2} - P_{a\_V2}}}\right).$$

De même lors de l'étape c''') de calcul des limites de la zone de tolérance, le calcul de ces limites est réalisé selon les équations (7) et (8) avec $P'_{ref\_cor}\,(t\text{-}t_{max})$ et $P'_{mes\_cor}\,(t\text{-}t_{max})$ en lieu et place de respectivement $P_{ref}(t)$ et $P_{mes}(t)$.

En utilisation, la mise en oeuvre d'une pipette 2 selon ce mode de réalisation reste, pour l'utilisateur, similaire à celle d'une pipette 2 selon le premier mode de réalisation.

Selon un cinquième mode de réalisation, chacune des courbes de remplissage peut être une courbe de la pression $P''_{cor}$, telle qu'illustrée sur la figure 10, après actionnement du piston 30 et avec une variable temporelle $t_{cor}$ identique à celle utilisée dans le quatrième mode de réalisation.

Une telle pression $P''_{cor}$ est une pression obtenue par l'équation suivante :

$$P''_{cor}\left(t_{cor}\right) = \sqrt{\frac{P_{mes}\left(t_{cor}\right) - P_a}{P_{max} - P_a}}$$

avec $\quad t_{cor} = \dfrac{t - t_{max}}{\sqrt{P_{max} - P_a}}\quad.$

Un procédé selon ce mode de réalisation se différencie d'un procédé selon le troisième mode de réalisation en ce que les courbe de remplissage de référence sont des courbes de pression $P''_{cor}$ dont la variable temporelle est $t_{cor}$ déterminée à partir des valeurs caractéristiques correspondant au volume de référence.

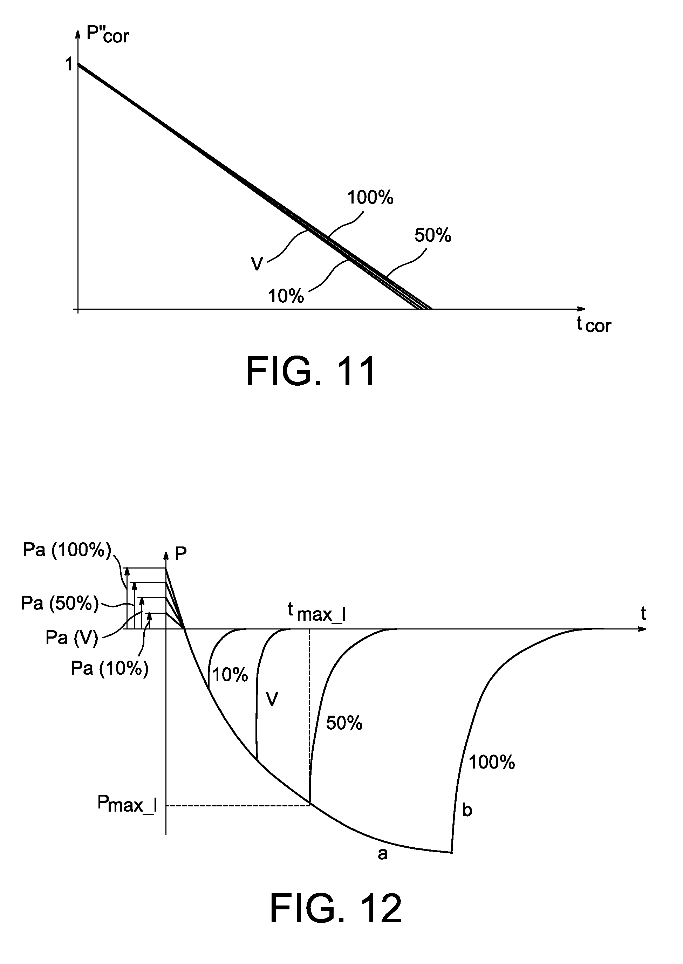

Dans ce mode de réalisation, comme illustré par la figure 11, toutes les courbes de remplissage présentent une décroissance similaire sensiblement linéaire. Ainsi, selon un principe identique à celui utilisé dans les troisième et quatrième modes de réalisation, et avec une précision accru, lors de l'étape C''), le calcul de la courbe de remplissage calculée est réalisé à partir d'une extrapolation linéaire du même type que celle de l'équation (9). L'équation utilisée est donc la suivante :

$$P''_{ref\_cor}(t_{cor}) = \frac{V - V_1}{V_2 - V_1}(P''_{V2\_cor}(t_{cor}) - P''_{V1\_cor}(t_{cor})) + P''_{V1\_cor}(t_{cor})$$

avec $P''_{ref\_cor}$ la pression corrigée calculée, $P''_{V1\_cor}$ la pression corrigée au volume de référence $V_1$ et $P''_{V2\_cor}$ la pression corrigée au volume de référence $V_2$.

De même que pour le quatrième mode de réalisation, les dépendances en $t_{cor}$ de $P''_{V2\_cor}$ et $P''_{V2\_cor}$ dans cette équation sont calculées à partir des valeurs caractéristiques au volume correspondant, c'est-à-dire que par exemple

$$P''_{V2\_cor}(t_{cor}) = P''_{V2\_cor}\left(\frac{t - t_{max\_V2}}{\sqrt{P_{max\_V2} - P_{a\_V2}}}\right).$$

En utilisation, la mise en oeuvre d'une pipette 2 selon ce mode de réalisation reste, pour l'utilisateur, similaire à celle d'une pipette 2 selon le premier mode de réalisation.

Selon une possibilité de l'invention, le système de traitement 16 peut être également adapté pour la détection d'anomalies pendant la libération du liquide présent dans le cône d'aspiration 10.

Une telle adaptation peut être réalisée de manière similaire à l'adaptation pour la détection d'anomalies lors du remplissage.

En effet, la figure 12 illustre les courbes de pression, dites de libération, qui peuvent être enregistrées à partir du capteur de pression 38 lors de la libération du liquide présent dans le cône d'aspiration.

Ces courbes de pressions présentent, de façon analogue aux courbes de pression enregistrées pendant le remplissage, deux phases, une phase d'inversion puis de montée en pression a') et une phase de retour de la pression à la valeur de la pression atmosphérique.

Au début de la première phase, la pression mesurée par le capteur de pression correspond à la dépression résiduelle $P_a$ restante après le remplissage de la pipette 2. L'actionnement du piston pour libérer le liquide entraîne une baisse graduelle de la dépression avec un passage à la pression atmosphérique suivi d'un passage en surpression. Lors de cette phase, après que la pression a atteinte la pression atmosphérique, la variation de pression est sensiblement identique quelque soit la quantité de liquide présent dans la pipette 2 et ce jusqu'à ce que la pression atteigne une valeur $P_{max\_1}$ de pression à un temps $t_{max\_1}$. $P_{max\_1}$ et $t_{max\_1}$ sont des valeurs caractéristiques de la courbe de libération à un volume de liquide donné.

La seconde phase correspond, après l'arrêt de l'actionnement du piston pour libérer le liquide, au retour à la pression atmosphérique. Cette seconde phase suit une variation de pression qui peut être modélisée à partir de l'équation suivante :

$$P(t) = P_{max\_l} \times \left(1 - \frac{t - t_{max\_l}}{\tau_l}\right)^2$$

avec $\tau_1$ une valeur caractéristique pouvant être calculé à instant t quelconque de la phase de retour à la pression atmosphérique à partir de l'équation suivante :

$$\tau_l = \frac{t - t_{max\_l}}{1 - \sqrt{\frac{p(t)}{P_{max\_l}}}}$$

De même que pour la phase de remplissage, il est possible de déterminer avec une précision suffisante les valeurs caractéristiques correspondant à la phase de libération pour un volume donné en réalisant une extrapolation linéaire à partir de courbe de pression de référence. Ainsi, selon l'exemple des courbes présentées sur la figure 12, il est possible de déterminer les valeurs caractéristiques pour le volume V avec les courbes de référence l'encadrant, c'est-à-dire pour les courbes correspondant à 10% et à 50% de la capacité nominale de la pipette 2.

L'homme du métier, ayant connaissance du procédé de détection d'anomalie pendant le remplissage de la pipette décrit ci-dessus, peut aisément réaliser un raisonnement similaire à celui présenté pour ledit procédé, les calculs permettant cette extrapolation ne sont donc pas décrits pour le procédé de détection d'anomalies pendant la libération du liquide à doser.

A partir des courbes de pression de la figure 12, il est également possible de déterminer la valeur caractéristique $S_1$ qui est caractéristique du rapport entre le volume de liquide présent dans le cône d'aspiration 10 avant libération et l'intégrale de la variation de pression pendant cette même libération.

Cette valeur caractéristique peut être calculée à partir de l'équation suivante :

$$S_l(V) = \frac{\sqrt{\dfrac{\rho}{2}} V}{\displaystyle\int_0^{t_{\max\_l}} \sqrt{P_a - P(t)}\,dt + \int_{t_{\max\_l}}^{t_{\max\_l} + \tau l} \sqrt{-P(t)}\,dt}$$

avec $\rho$ la viscosité du liquide.

Ce paramètre peut donc permettre, pour un volume donné de liquide à doser, de vérifier que la variation de pression pendant la libération du liquide par la pipette 2 est en concordance avec le volume donné présent dans celle-ci, et donc de vérifier si le volume de liquide à doser libéré est bien celui attendu.

En effet d'après l'équation ci-dessus le volume de liquide libéré est égale à :

$$V_{cal} = S \sqrt{\frac{2}{\rho}} \left( \int_0^{t_{\max\_l}} \sqrt{P_a - P(t)}\,dt + \int_{t_{\max\_l}}^{t_{\max\_l} + \tau l} \sqrt{-P(t)}\,dt \right)$$

Ce volume $V_{cal}$ peut aisément être comparé au volume de liquide à doser théoriquement présent dans le cône d'aspiration 10.

Ainsi l'ensemble ou certaines des valeurs caractéristiques de la libération du liquide par la pipette, $P_{min}$, $t_{min}$, $P_a$, $\tau1$ et $S_1$ peuvent être calculés pour un volume quelconque de liquide à doser et ainsi être utilisées pour détecter une anomalie lors de la libération par la pipette dudit volume de liquide à doser.

Le système de traitement 16 de la pipette 2 est adapté pour mettre en oeuvre ce principe lors de la mise en oeuvre d'un procédé de détection d'anomalies lors de la libération d'un liquide à doser.

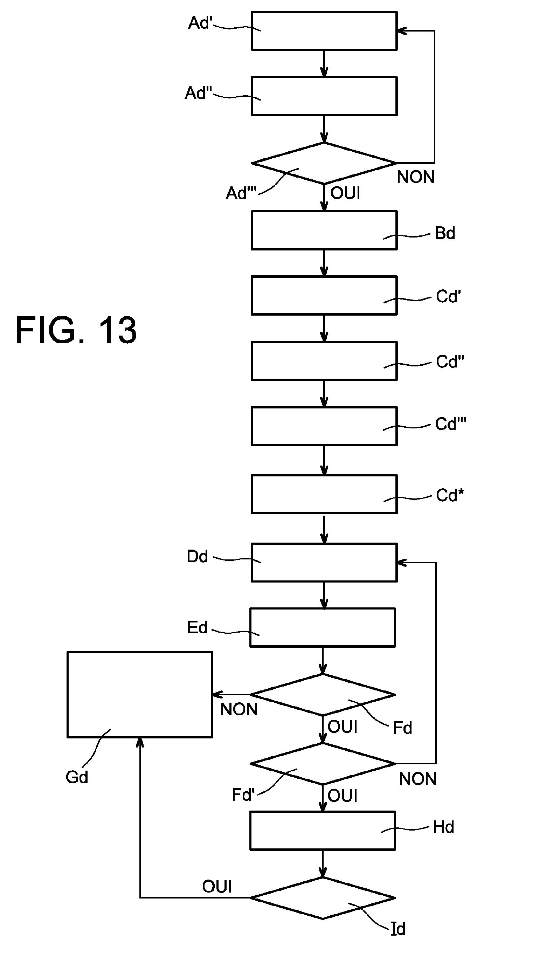

La figure 13 est un organigramme présentant les étapes d'un tel procédé. Un tel procédé comprend les étapes consistant à :

Ad') enregistrer les valeurs de pression mesurées à partir du moyen de contrôle de la pression pendant la libération d'un volume de référence de liquide contenu dans le cône d'aspiration 10,

Ad") déterminer les valeurs caractéristiques correspondant à la courbe de pression obtenue pour le volume de référence,

Ad"') vérifier que la pipette 2 est calibrée à tous les volumes de référence,

Bd) définir un volume voulu de liquide à doser,

Cd') calculer une courbe de libération calculée pour le volume voulu à partir des courbes de remplissage de référence,

Cd") faire une étape de calcul des limites haute et basse d'une zone de tolérance de libération en faisant respectivement une soustraction et une addition à la courbe de libération calculée d'une valeur de pression $\Delta P$.

Cd"') faire une étape de calcul des limites haute et basse de la zone de tolérance de libération en faisant respectivement un décalage temporel positif et négatif d'une valeur de temps $\Delta t$ des limites haute et basse calculées lors de l'étape Cd"),

Cd\*) actionner le piston 30 pendant le temps $t_{max\_1}$ correspondant au volume voulu calculé à l'étape Cd") pour permettre d'atteindre la pression $P_{max\_1}$ dans la chambre d'aspiration 22 et ainsi permettre de vider le cône d'aspiration 10, après relaxation de la pression dans la chambre d'aspiration 22,

Dd) libérer le cône d'aspiration 10 d'une partie du liquide à doser pendant un temps $dt$,

Ed) mesurer la pression à partir du capteur de pression 28,

Fd) vérifier si la pression est comprise dans la zone de tolérance,

Fd') vérifier si t est supérieur ou égale au temps de libération correspondant au volume voulu,

Gd) indiquer qu'une anomalie est détectée,

Hd) calculer le volume de liquide à doser libéré,

Id) vérifier si la différence entre le volume de liquide à doser calculé et le volume voulu est supérieure en valeur absolue à une valeur seuil.

De façon similaire aux différents modes de réalisation décrits ci-dessus concernant le procédé de détection d'anomalies pendant le remplissage de la pipette 2, l'homme du métier peut adapter de manière similaire le système de traitement 16 pour la mise en oeuvre de différents modes de réalisation du procédé de détection d'anomalies lors de la libération du liquide à doser.

Ainsi la courbe de libération peut être une courbe de pression après $t_{max\_1}$, une courbe de pression corrigée d'un type similaire à $P_{cor}(t-t_{max})$ , ou une courbe de pression corrigée d'un type similaire à $P'_{cor}(t_{cor})$ ou $P''_{cor}(t_{cor})$ avec une variable temporelle d'un type similaire à $t_{cor}$, sans que l'on sorte du cadre de l'invention.

Selon deux possibilités de l'invention, les étapes d'étalonnage en pression de l'étape A) et celles de l'étape Ad) peuvent être réaliséee lors de la fabrication de la pipette pour fournir une pipette 2 prête à l'emploi ou réalisée avant l'utilisation de la pipette 2 de manière à ce que l'utilisateur puisse adapter le système de traitement pour détecter une anomalie pendant le remplissage et/ou pendant la libération du liquide à doser. Ces deux possibilités sont compatibles entre elles, l'utilisateur ayant la possibilité d'utiliser un étalonnage en pression standard lors de mesures rapides ne nécessitant pas une forte précision et la possibilité d'un étalonnage en pression adapté pour un liquide à doser présentant une viscosité particulière et/ou pour des mesures nécessitant une détection d'anomalies fine et/ou compatible avec des conditions expérimentales particulières (vitesses de remplissage et/ou de libération particulière, définition de volumes de référence adaptés...)

De même les valeurs $\Delta P$ et $\Delta t$, utilisées pour le calcul de la zone de tolérance, peuvent être fixées en usine, lors de la production de la pipette 2, ou rentrées par l'utilisateur avant la première utilisation. Ces deux possibilités sont compatibles, l'utilisateur ayant, dans ce cas, le choix de fonctionner avec une zone de tolérance standard ou avec une zone de tolérance adaptée à ses besoins.

Selon une possibilité de l'invention le système de traitement peut également être adapté pour identifier la cause de l'anomalie de remplissage ou de libération et l'indiquer à l'utilisateur si la pipette 2 est équipée d'un écran 12.

Ainsi lors du remplissage si la courbe de remplissage présente une faiblesse conjointe de $t_{max}$, $P_{max}$ et du volume calculé, il peut être identifié que la course du piston 30 est trop courte, le système de traitement 16 pouvant, dans ce cas, compenser en actionnant le piston 30 de manière à compenser cette faiblesse.

Si un $t_{max}$ important est mesuré en conjonction avec une faiblesse de $P_{max}$, le système de traitement peut indiquer que la vitesse de piston 30 est trop faible, le système de traitement pouvant, dans ce cas, compenser en augmentant la vitesse du piston 30.

De même, si le signal de pression reste sensiblement égal à la pression atmosphérique pendant le remplissage de la pipette 2, le système de traitement peut indiquer que le cône d'aspiration 10 n'est pas plongé dans le liquide.

Si le signal de pression ne présente pas de phase b) de relaxation, le système de traitement peut indiquer que le cône d'aspiration 10 est bouché et qu'il est donc nécessaire d'en changer.

Si $t_{max}$ présente une valeur attendue et que $P_{max}$ et le volume calculé $V_{cal}$ présentent tous deux une faible valeur, le système de traitement peut indiquer une fuite entre le piston 30 et la chambre d'aspiration 22 et qu' il est nécessaire de faire une révision de la pipette 2.

Selon une possibilité supplémentaire de l'invention le système de traitement peut être adapté pour permettre un enregistrement des courbes de pression successives de manière à permettre une traçabilité des mesures réalisées à partir de la pipette 2. Cette dernière possibilité est particulièrement utile pour un système de pipetage automatisé, tel que celui d'un analyseur chimique automatisé.

De même si l'ensemble des modes de réalisation décrits ci-dessus concerne une pipette automatisée 2, l'invention ne se limite pas aux seules pipettes 2 automatisées possédant un seul cône d'aspiration 10 mais concerne l'ensemble des dispositifs de dosage présentant un système de remplissage automatisé, tels que par exemple les analyseurs chimique automatisés ou encore les pipettes doubles, présentant un double système d'aspiration comprenant deux chambres d'aspiration 22, deux cônes d'aspiration 10 et deux pistons 30, ou des système d'aspiration multiple comprenant plus de deux chambres d'aspiration 22, compatibles avec plusieurs cônes d'aspiration 10 et comportant plusieurs pistons 30.

Il est également à noter que si dans ce mode de réalisation de la pipette 2 décrit ci-dessus, le capteur de pression 38 formant le moyen de contrôle de la pression est le capteur de pression 38 présent dans la chambre d'aspiration 22, le capteur de pression 38 peut également être disposé de manière à mesurer la pression dans le cône d'aspiration 10. En effet, les courbes de variation de pression obtenues à partir d'un capteur de pression 38 présent dans la chambre d'aspiration 22 et à partir d'un capteur de pression 38 adapté pour mesurer la pression dans le cône d'aspiration 10 présentent une variation sensiblement identique.

Si dans l'ensemble des modes de réalisations décrits ci-dessus, le moyen d'avertissement est fourni par un écran, il est également envisageable, sans que l'on sorte du cadre de l'invention, que la pipette comporte, en remplacement ou en complément de l'écran, une alarme sonore indiquant à l'utilisateur l'existence d'une anomalie pendant le remplissage de la pipette. Selon cette possibilité, si le moyen d'avertissement est fourni par l'alarme sonore seule, le son de cette alarme pourra être modulé afin d'indiquer le type d'anomalie à l'utilisateur.

## Revendications

1. Procédé de détection d'anomalies lors du remplissage d'un dispositif de dosage de liquide par un liquide à doser, ledit dispositif de dosage comprenant:

   - au moins un organe d'aspiration destiné à être en contact avec le liquide à doser et à en contenir lors du remplissage du dispositif de dosage,
   - au moins un moyen de remplissage agencé pour remplir de façon automatisée l'organe d'aspiration, ledit moyen de remplissage comprenant au moins une zone (22a) en communication avec l'organe d'aspiration, ladite zone (22a) contenant un gaz,
   - et au moins un moyen de contrôle de pression agencé pour mesurer la pression dans la zone (22a) du moyen de remplissage ou dans une zone de l'organe d'aspiration contenant un gaz,
   le procédé de détection comportant les étapes consistant à :

   - a) faire un étalonnage en pression préalable du remplissage du dispositif de dosage, cet étalonnage en pression étant réalisé à au moins deux volumes de référence de manière à définir pour chacun des au moins deux volumes de référence une courbe de remplissage de référence,
   - b) définir un volume voulu de liquide à doser,
   - c) calculer pour le volume voulu une zone de tolérance présentant une limite haute et une limite basse, les limites haute et basse de la zone de tolérance étant calculées à partir des courbes de remplissage de référence,
   - d) remplir l'organe d'aspiration avec le liquide à doser pendant un temps *dt*,
   - e) mesurer la pression à partir du moyen de contrôle de la pression,
   - f) vérifier si la pression est comprise dans la zone de tolérance et si la pression est dans la zone de tolérance revenir à l'étape d) jusqu'à ce qu'un temps de remplissage correspondant au volume voulu de liquide à doser soit atteint,
   - g) si la pression est en dehors de la zone de tolérance, indiquer qu'une anomalie est détectée.

2. Procédé selon la revendication 1, comprenant en outre, une étape h) consistant à calculer, à partir des pressions mesurées durant le remplissage du dispositif de dosage, le volume de liquide à doser dans l'organe d'aspiration et une étape i) consistant à, si la différence entre le volume voulu et le volume de liquide à doser calculé est supérieure, en valeur absolue, à une valeur seuil, indiquer qu'une anomalie est détectée.

3. Procédé selon la revendication 1 ou 2, dans lequel l'étape c) comprend une étape c') consistant à calculer une courbe de remplissage calculée pour le volume voulu à partir des courbes de remplissage de référence, et une étape c") lors de laquelle le calcul des limites haute et basse de la zone de tolérance comporte une étape de calcul consistant pour la limite haute et la limite basse à faire respectivement, une soustraction et une addition à la courbe de remplissage calculée d'une valeur de pression $\Delta P$.

4. Procédé selon l'une des revendications 1 à 3 dans lequel l'étape c) comprend une étape c') consistant à calculer une courbe de remplissage calculée pour le volume donné à partir des courbes de remplissage de référence, et une étape c''') lors de laquelle le calcul des limites haute et basse de la zone de tolérance comporte une étape de calcul consistant, pour la limite haute et la limite basse, à faire respectivement un décalage temporel positif et négatif d'une valeur de temps $\Delta t$.

**5.** Procédé selon l'une des revendications 1 à 4, dans lequel l'étape a) comprend une étape a') consistant à enregistrer des valeurs de pression mesurées à partir du moyen de contrôle de la pression pendant le remplissage de l'organe d'aspiration par un volume de référence de liquide et une étape a") consistant à déterminer la courbe de remplissage correspondant à la courbe de pression obtenue à l'étape a'), cette étape a") pouvant également consister à déterminer des valeurs caractéristiques correspondant à cette même courbe de pression, les étapes a') et a") étant réalisées pour chacun des volumes de référence.

**6.** Procédé selon la revendication 5, dans lequel les valeurs caractéristique de la courbe de pression déterminées pendant l'étape a"") comprennent au moins une valeur caractéristique sélectionnée dans le groupe comportant :

- une valeur de dépression maximum $P_{max}$ correspondant à la valeur de dépression maximum atteinte lors du remplissage,
- un temps d'atteinte de la dépression maximum $t_{max}$ correspondant au temps auquel est atteinte la dépression maximum,
- une dépression résiduelle $P_{a'}$ correspondant à la dépression résiduelle après le remplissage du dispositif de dosage,
- et un temps caractéristique $\tau$ représentatif de la vitesse de décroissance de la dépression après que la dépression $P_{max}$ a été atteinte.

**7.** Procédé selon la revendications 6 en combinaison avec la revendication 3 ou 4, dans lequel l'étape c') comprend une étape consistant à interpoler linéairement la courbe de remplissage et/ou des valeurs caractéristiques de la courbe de remplissage au volume voulu à partir d'au moins deux courbes de remplissage des volumes de référence et/ou des valeurs caractéristiques des courbes de pression d'au moins deux volumes de référence.

**8.** Procédé selon les revendications 3 à 7, dans lequel lors des l'étape c") et c''') les limites haute et basse de la zone de tolérance sont calculées à partir de la courbe de remplissage au volume voulu calculée à l'étape c') en utilisant les formules suivante :

$$- \quad P_+(t) = P_{ref}(t) + \Delta P + \left|\frac{dP(t)}{dt}\right| \times \Delta t \ ,$$

$$- \quad P_-(t) = P_{ref}(t) - \Delta P - \left|\frac{dP(t)}{dt}\right| \times \Delta t \ ,$$

avec $P_+(t)$ et $P_-(t)$ les limites haute et basse de la zone de tolérance à l'instant $t$, $P_{ref}(t)$ la pression de calculée à l'instant $t$ à partir de la courbe de remplissage calculée et P(t) la variation de pression mesuré à l'instant t.

**9.** Procédé selon les revendications 6 ou 7, dans lequel le procédé comprend en outre, entre les étapes c) et d), une étape c*) consistant à faire fonctionner les moyens de remplissage pendant le temps $t_{max}$ calculé pour le volume voulu.

**10.** Procédé selon la revendication 9 en combinaison avec la revendication 7, dans lequel les courbes de remplissage de référence et calculée sont les courbes de variation de pression après le temps $t_{max}$ correspondant.

**11.** Procédé selon la revendication 9 en combinaison avec la revendication 7, dans lequel les courbes de remplissage de référence et calculée sont les courbes de variation du facteur $P_{cor}$ après le temps $t_{max}$, le facteur $P_{cor}(t)$ étant

égale à $\dfrac{P(t) - P_a}{P_{max} - P_a}$ .

**12.** Procédé selon la revendication 9 en combinaison avec la revendication 7, dans lequel les courbes de remplissage de référence et calculée sont les courbes de variation du facteur $P'_{cor}$ après le temps $t_{max}$ en fonction d'une variable temporelle $t_{cor}$ le facteur $P'_{cor}(t_{cor})$ étant égale à $\dfrac{P(t_{cor}) - P_a}{P_{\max} - P_a}$ et la variable temporelle $t_{cor}$ étant égale à

$$\dfrac{t - t_{\max}}{\sqrt{P_{\max} - P_a}} \ .$$

**13.** Procédé selon la revendication 9 en combinaison avec la revendication 7, dans lequel les courbes de remplissage de référence et calculée sont les courbes de variation du facteur $P''_{cor}$ après le temps $t_{max}$ en fonction d'une variable temporelle $t_{cor}$ le facteur $P''_{cor}(t_{cor})$ étant égale à $\sqrt{\dfrac{P(t_{cor}) - P_a}{P_{\max} - P_a}}$ et la variable temporelle $t_{cor}$ étant égale à

$$\dfrac{t - t_{\max}}{\sqrt{P_{\max} - P_a}} \ .$$

**14.** Dispositif de dosage de liquide **caractérisé en ce qu'**il est adapté pour mettre en oeuvre un procédé selon l'une des revendications 1 à 13, le dispositif de dosage comprenant :

- au moins un organe d'aspiration destiné à être en contact avec le liquide à doser et à en contenir lors du remplissage du dispositif de dosage,
- au moins un moyen de remplissage agencé pour remplir de façon automatisée l'organe d'aspiration, ledit moyen de remplissage comprenant au moins une zone (22a) en communication avec l'organe d'aspiration, ladite zone (22a) contenant un gaz,
- au moins un moyen de contrôle de la pression agencé pour enregistrer la pression dans la zone (22a) du moyen de remplissage ou dans une zone de l'organe d'aspiration contenant un gaz,
- un moyen d'avertissement adapté pour indiquer la présence d'une anomalie
- des moyens de commande et de calcul agencés pour commander le moyen de remplissage et au moins un moyen de contrôle de pression, les moyens de commande et de calcul étant adaptés pour réaliser un étalonnage en pression du remplissage du dispositif de dosage à au moins deux volumes de référence et définir pour chacun des au moins deux volumes une courbe de référence, pour calculer les limites haute et basse de la zone de tolérance pour le volume voulu à partir des courbes de référence et vérifier si la pression reste dans ladite zone de tolérance lors du remplissage, lesdits moyens de commande et de calcul étant en outre agencés pour communiquer avec le moyen d'avertissement.

**15.** Dispositif de dosage selon la revendication 14, dans lequel le dispositif de dosage met également en oeuvre un procédé de détection d'anomalies lors de la libération du liquide à doser.


**Patentansprüche**

**1.** Verfahren zur Erfassung von Anomalien beim Befüllen einer Flüssigkeitsdosiervorrichtung mit einer zu dosierenden Flüssigkeit, wobei die Dosiervorrichtung aufweist:

mindestens eine Einsaugeinrichtung, die dazu bestimmt ist, in Kontakt mit der zu dosierenden Flüssigkeit zu sein und diese beim Befüllen der Dosiervorrichtung aufzunehmen,
mindestens eine Befüllungseinrichtung, die ausgebildet ist, um in automatisierter Weise die Einsaugeinrichtung zu befüllen, wobei die Befüllungseinrichtung mindestens eine Zone (22a) aufweist, die in Verbindung mit der Einsaugeinrichtung steht, wobei die Zone (22a) ein Gas enthält,
und mindestens eine Drucküberwachungseinrichtung, die ausgebildet ist, um den Druck in der Zone (22a) der Befüllungseinrichtung oder in einer Zone der Einsaugeinrichtung, die ein Gas enthält, zu messen,
wobei das Erfassungsverfahren die folgenden Schritte umfasst:

a) Vornehmen einer Druckkalibrierung, und zwar vorangehend zur Befüllung der Dosiervorrichtung, wobei die Druckkalibrierung mit mindestens zwei Referenzvolumen durchgeführt wird, so dass für jedes der mindestens zwei Referenzvolumen eine Befüllungsreferenzkurve definiert wird,

b) Definieren eines gewünschten Volumens von zu dosierender Flüssigkeit,

c) Berechnen, für das gewünschte Volumen, einer Toleranzzone, die eine obere Grenze und eine untere Grenze aufweist, wobei die obere und die untere Grenze der Toleranzzone ausgehend von den Befüllungsreferenzkurven berechnet werden,

d) Befüllen der Einsaugeinrichtung mit der zu dosierenden Flüssigkeit während einer Zeit $dt$,

e) Messen des Drucks an der Drucküberwachungseinrichtung,

f) Verifizieren, ob der Druck sich innerhalb der Toleranzzone befindet, und falls sich der Druck innerhalb der Toleranzzone befindet, Zurückgehen auf Schritt d) bis eine Befüllungszeit erreicht wird, die dem gewünschten Volumen von zu dosierender Flüssigkeit entspricht,

g) falls der Druck außerhalb der Toleranzzone liegt, anzeigen, dass eine Anomalie erfasst wurde.

2. Verfahren nach Anspruch 1, das weiter einen Schritt h), der darin besteht, ausgehend von Druckwerten, die während des Befüllens der Dosiervorrichtung gemessen werden, das Volumen von zu dosierender Flüssigkeit in der Einsaugeinrichtung zu berechnen, und einen Schritt i) umfasst, der darin besteht, falls die Differenz, und zwar als Betrag, zwischen dem gewünschten Volumen und dem berechneten Volumen von zu dosierender Flüssigkeit größer ist als ein Schwellenwert, anzuzeigen, dass eine Anomalie erfasst wurde.

3. Verfahren nach Anspruch 1 oder 2, bei dem der Schritt c) einen Schritt c'), der darin besteht, eine Befüllungskurve zu berechnen, die für das gewünschte Volumen ausgehend von Befüllungsreferenzkurven berechnet wird, und einen Schritt c") umfasst, bei dem die Berechnung der oberen und der unteren Grenze der Toleranzzone einen Berechnungsschritt umfasst, der darin besteht, für die obere Grenze und die untere Grenze eine Subtraktion bzw. eine Addition eines Druckwertes $\Delta P$ von/zu der berechneten Befüllungskurve durchzuführen.

4. Verfahren nach einem der Ansprüche 1 bis 3, bei dem der Schritt c) einen Schritt c'), der darin besteht, eine Befüllungskurve zu berechnen, die für das gegebene Volumen ausgehend von Befüllungsreferenzkurven berechnet wird, und einen Schritt c"') umfasst, bei dem die Berechnung der oberen und der unteren Grenze der Toleranzzone einen Berechnungsschritt umfasst, der darin besteht, für die obere Grenze und die untere Grenze eine positive bzw. negative zeitliche Verschiebung um einen Zeitwert $\Delta t$ durchzuführen.

5. Verfahren nach einem der Ansprüche 1 bis 4, bei dem der Schritt a) einen Schritt a'), der darin besteht, Druckwerte aufzuzeichnen, die an der Drucküberwachungseinrichtung während der Befüllung der Einsaugeinrichtung mit einem Flüssigkeitsreferenzvolumen gemessen werden, und einen Schritt a") umfasst, der darin besteht, die Befüllungskurve zu bestimmen, die der bei Schritt a') erhaltenen Druckkurve entspricht, wobei der Schritt a") auch darin bestehen kann, charakteristische Werte zu bestimmen, die dieser Druckkurve entsprechen, wobei die Schritte a') und a") für jedes der Referenzvolumen durchgeführt werden.

6. Verfahren nach Anspruch 5, bei dem die charakteristischen Werte der Druckkurve, die während des Schrittes a") bestimmt wurden, mindestens einen charakteristischen Wert beinhalten, der aus der Gruppe gewählt ist, die beinhaltet:

einen Wert maximalen Unterdrucks $P_{max}$, der dem Wert des maximalen beim Befüllen erreichten Unterdrucks entspricht,

eine Maximalunterdrucks-Erreichungszeit $t_{max}$, die der Zeit entspricht, zu der der maximale Unterdruck erreicht wird,

ein verbleibender Unterdruck $P_a$, der dem Unterdruck entspricht, der nach dem Befüllen der Dosiervorrichtung verbleibt,

und eine charakteristische Zeit $\tau$, die repräsentativ ist für die Abnahmegeschwindigkeit des Unterdrucks, nachdem der Unterdruck $P_{max}$ erreicht wurde.

7. Verfahren nach Anspruch 6 in Kombination mit Anspruch 3 oder 4, bei dem der Schritt c') einen Schritt umfasst, der darin besteht, die Befüllungskurve und/oder die charakteristischen Werte der Befüllungskurve auf das gewünschte Volumen linear zu interpolieren, und zwar ausgehend von mindestens zwei Befüllungskurven der Referenzvolumen und/oder den charakteristischen Werten der Druckkurven von mindestens zwei Referenzvolumen.

8. Verfahren nach den Ansprüchen 3 bis 7, bei dem während der Schritte c") und c"') die obere und die untere Grenze der Toleranzzone berechnet werden, und zwar ausgehend von der Kurve zur Befüllung mit dem gewünschten Volumen, die bei Schritt c') berechnet wurde, unter Verwendung der folgenden Formeln:

$$- \quad P_+(t) = P_{ref}(t) + \Delta P + \left| \frac{dP(t)}{dt} \right| \times \Delta t \, ,$$

$$- \quad P_-(t) = P_{ref}(t) - \Delta P - \left| \frac{dP(t)}{dt} \right| \times \Delta t \, ,$$

wobei $P_+(t)$ und $P_-(t)$ die obere und die untere Grenze der Toleranzzone zum Zeitpunkt $t$ sind, $P_{ref}(t)$ der berechnete Druck zum Zeitpunkt $t$ ausgehend von der berechneten Befüllungskurve ist und $P(t)$ die Änderung des gemessenen Drucks zum Zeitpunkt $t$ ist.

9. Verfahren nach Anspruch 6 oder 7, bei dem das Verfahren weiter, zwischen den Schritten c) und d), einen Schritt c\*) umfasst, der darin besteht, zu bewerkstelligen, dass die Befüllungseinrichtung während der Zeit $t_{max}$ arbeitet, die für das gewünschte Volumen berechnet wurde.

10. Verfahren nach Anspruch 9 in Kombination mit Anspruch 7, bei dem die Befüllungsreferenzkurven und die berechnete Kurve die Druckänderungskurven nach der entsprechenden Zeit $t_{max}$ sind.

11. Verfahren nach Anspruch 9 in Kombination mit Anspruch 7, bei dem die Befüllungsreferenzkurven und die berechnete Kurve die Kurven einer Änderung des Faktors $P_{cor}$ nach der Zeit $t_{max}$ sind, wobei der Faktor $P_{cor}(t)$ $\dfrac{P(t) - P_a}{P_{max} - P_a}$ beträgt.

12. Verfahren nach Anspruch 9 in Kombination mit Anspruch 7, bei dem die Befüllungsreferenzkurven und die berechnete Kurve die Kurven einer Änderung des Faktors $P'_{cor}$ nach der Zeit $t_{max}$ in Abhängigkeit von einer zeitlichen Variablen $t_{cor}$ sind, wobei der Faktor $P'_{cor}(t_{cor})$ $\dfrac{P(t_{cor}) - P_a}{P_{max} - P_a}$ beträgt und die zeitliche Variable $t_{cor}$ $\dfrac{t - t_{max}}{\sqrt{P_{max} - P_a}}$ beträgt.

13. Verfahren nach Anspruch 9 in Kombination mit Anspruch 7, bei dem die Befüllungsreferenzkurven und die berechnete Kurve die Kurven einer Änderung des Faktors $P''_{cor}$ nach der Zeit $t_{max}$ in Abhängigkeit von einer zeitlichen Variablen $t_{cor}$ sind, wobei der Faktor $P''_{cor}(t_{cor})$ $\sqrt{\dfrac{P(t_{cor}) - P_a}{P_{max} - P_a}}$ beträgt und die zeitliche Variable $t_{cor}$ $\dfrac{t - t_{max}}{\sqrt{P_{max} - P_a}}$ beträgt.

14. Flüssigkeitsdosiervorrichtung, **dadurch gekennzeichnet**, das sie ausgebildet ist, um ein Verfahren nach einem der Ansprüche 1 bis 13 durchzuführen, wobei die Dosiervorrichtung aufweist:

   mindestens eine Einsaugeinrichtung, die dazu bestimmt ist, in Kontakt mit der zu dosierenden Flüssigkeit zu sein und diese beim Befüllen der Dosiervorrichtung aufzunehmen,
   mindestens eine Befüllungseinrichtung, die ausgebildet ist, um in automatisierter Weise die Einsaugeinrichtung zu befüllen, wobei die Befüllungseinrichtung mindestens eine Zone (22a) aufweist, die in Verbindung mit der Einsaugeinrichtung steht, wobei die Zone (22a) ein Gas enthält,
   und mindestens eine Drucküberwachungseinrichtung, die ausgebildet ist, um den Druck in der Zone (22a) der Befüllungseinrichtung oder in einer Zone der Einsaugeinrichtung, die ein Gas enthält, aufzuzeichnen,
   eine Warneinrichtung, die ausgebildet ist, um das Vorliegen einer Anomalie anzuzeigen,
   Steuerungs- und Berechnungseinrichtungen, die zum Steuern der Befüllungseinrichtung ausgebildet sind, und mindestens eine Drucküberwachungseinrichtung, wobei die Steuerungs- und Berechnungseinrichtungen ausgebildet sind, um eine Druckkalibrierung der Befüllung der Dosiervorrichtung mit mindestens zwei Referenzvolumen durchzuführen und für jedes der mindestens zwei Volumen eine Referenzkurve zu definieren, um die obere und die untere Grenze der Toleranzzone für das gewünschte Volumen ausgehend von den Referenzkurven zu berechnen und zu verifizieren, ob der Druck während des Befüllens in der Toleranzzone bleibt, wobei die Steuerungs- und Berechnungseinrichtungen weiter ausgebildet sind, um mit der Warneinrichtung zu kommunizieren.

15. Vorrichtung zur Dosierung nach Anspruch 14, bei der die Dosiervorrichtung auch ein Verfahren zur Erfassung von Anomalien während der Freigabe der zu dosierenden Flüssigkeit durchführt.

**Claims**

1. Method for detecting anomalies during the filling of a liquid metering device with a liquid to be measured out, said metering device comprising:

   - at least one suction member intended to be in contact with the liquid to be measured out and to contain same during the filling of the metering device,
   - at least one filling means arranged for filling, in an automated manner, the suction member, said filling means comprising at least one zone (22a) communicating with the suction member, said zone (22a) containing a gas,
   - and at least one pressure monitoring means arranged for measuring the pressure in the zone (22a) of the filling means or in a zone of the suction member containing a gas,
   the detection method comprising steps consisting of:

      - a) performing a prior pressure calibration of the filling of the metering device, this pressure calibration being carried out with at least two reference volumes so as to define a reference filling curve for each of the at least two reference volumes,
      - b) defining a desired volume of liquid to be measured out,
      - c) calculating for the desired volume a tolerance range having an upper limit and a lower limit, the upper and lower limits of the tolerance range being calculated on the basis of the reference filling curves,
      - d) filling the suction member with the liquid to be measured out for a time dt,
      - e) measuring the pressure using the pressure monitoring means,
      - f) checking whether the pressure is within the tolerance range and if the pressure is in the tolerance range returning to step d) until a filling time corresponding to the desired volume of liquid to be measured out is attained,
      - g) if the pressure is outside the tolerance range, reporting that an anomaly has been detected.

2. Method according to claim 1, further comprising, a step h) consisting of calculating, on the basis of the pressures measured during the filling of the metering device, the volume of liquid to be measured out in the suction member and a step i) consisting of, if the difference between the desired volume and the calculated volume of liquid to be measured out is greater, in absolute terms, than a threshold value, reporting that an anomaly has been detected.

3. Method according to claim 1 or 2, wherein step c) comprises a step c') consisting of calculating a filling curve calculated for the desired volume on the basis of the reference filling curves, and a step c") during which the calculation of the upper and lower limits of the tolerance range comprises a calculation step consisting for the upper limit and the lower limit of respectively subtracting and adding a pressure value $\Delta P$ to the calculated filling curve.

4. Method according to one of claims 1 to 3 wherein step c) comprises a step c') consisting of calculating a calculated filling curve for the given volume on the basis of the reference filling curves, and a step c''') during which the calculation of the upper and lower limits of the tolerance range comprises a calculation step consisting, for the upper limit and the lower limit, of respectively creating a positive and negative time lag by a time value $\Delta t$.

5. Method according to one of claims 1 to 4, wherein step a) comprises a step a') consisting of recording pressure values measured using the pressure monitoring means during the filling of the suction member with a reference volume of liquid and a step a") consisting of determining the filling curve corresponding to the pressure curve obtained in step a'), this step a") also optionally consisting of determining the characteristic values corresponding to said pressure curve, steps a') and a") being carried out for each of the reference volumes.

6. Method according to claim 5, wherein the characteristic values of the pressure curve determined during step a")

comprise at least one characteristic value selected in the group comprising:

- a maximum vacuum pressure value $P_{max}$ corresponding to the maximum vacuum pressure value reached during filling,
- a maximum vacuum pressure time $t_{max}$ corresponding to the time at which the maximum vacuum pressure is reached,
- a residual vacuum pressure $P_a$, corresponding to the residual vacuum pressure after filling the metering device,
- and a characteristic time $\tau$ representing the rate of decline of the vacuum pressure after the vacuum pressure $P_{max}$ has been reached.

7. Method according to claim 6 in conjunction with claim 3 or 4, wherein step c') comprises step consisting of linearly interpolating the filling curve and/or characteristic values of the filling curve at the desired volume on the basis of at least two reference volume filling curves and/or characteristic values of the pressure curves of at least two reference volumes.

8. Method according to claims 3 to 7, wherein, during steps c'') and c'''), the upper and lower limits of the tolerance range are calculated on the basis of the calculated filling curve at step c') using the following formulae:

$$- P_{+}(t) = P_{ref}(t) + \Delta P + \left| \frac{dP(t)}{dt} \right| \times \Delta t \, ,$$

$$- P_{-}(t) = P_{ref}(t) - \Delta P - \left| \frac{dP(t)}{dt} \right| \times \Delta t \, ,$$

where $P_{+}(t)$ and $P_{-}(t)$ are the upper and lower limits of the tolerance range at the time t, $P_{ref}(t)$ is the pressure calculated at the time t on the basis of the calculated filling curve and P(t) is the pressure variation measured at the time t.

9. Method according to claims 6 or 7, wherein the method further comprises, between steps c) and d), a step c*) consisting of operating the filling means for the time $t_{max}$ calculated for the desired volume.

10. Method according to claims 9 and 7, wherein the reference and calculated filling curves are the pressure variation curves after the corresponding time $t_{max}$.

11. Method according to claims 9 and 7, wherein the reference and calculated filling curves are the variation curves of the factor $P_{cor}$ after the time $t_{max}$, the factor $P_{cor}(t)$ being equal to $\dfrac{P(t) - P_a}{P_{max} - P_a}$ .

12. Method according to claims 9 and 7, wherein the reference and calculated filling curves are the variation curves of the factor $P'_{cor}$ after the time $t_{max}$ as a function of a time variable $t_{cor}$, the factor $P'_{cor}(t_{cor})$ being equal to $\dfrac{P(t_{cor}) - P_a}{P_{max} - P_a}$ and the time variable $t_{cor}$ being equal to $\dfrac{t - t_{max}}{\sqrt{P_{max} - P_a}}$ .

13. Method according to claims 9 and 7, wherein the reference and calculated filling curves are the variation curves of the factor $P''_{cor}$ after the time $t_{max}$ as a function of a time variable $t_{cor}$, the factor $P''_{cor}(t_{cor})$ being equal to

$$\sqrt{\frac{P(t_{cor}) - P_a}{P_{max} - P_a}}$$ and the time variable $t_{cor}$ being equal to $$\frac{t - t_{max}}{\sqrt{P_{max} - P_a}}.$$

14. Liquid metering device **characterised in that** it is suitable for implementing a method according to any of claims 1 to 13, the metering device comprising:

- at least one suction member intended to be in contact with the liquid to be measured out and to contain same during the filling of the metering device,
- at least one filling means arranged for filling, in an automated manner, the suction member, said filling means comprising at least one zone (22a) communicating with the suction member, said zone (22a) containing a gas,
- at least one pressure monitoring means arranged for recording the pressure in the zone (22a) of the filling means or in a zone of the suction member containing a gas,
- warning means suitable for reporting the presence of an anomaly
- control and calculating means arranged for controlling the filling means and at least one pressure monitoring means, the control and calculating means being suitable for carrying out a pressure calibration of the filling of the metering device with at least two reference volumes and defining a reference curve for each of the at least two volumes, for calculating the upper and lower limits of the tolerance range for the desired volume on the basis of the reference curves and for checking whether the pressure remains in said tolerance range during filling, said control and calculating means being further arranged for communicating with the warning means.

15. Metering device according to claim 14, wherein the metering device also implements a method for detecting anomalies on the release of the liquid to be measured out.

FIG. 1

FIG. 2

FIG. 5

FIG. 3

```
                              ┌──────────────┐
                              │              │──── A
                              └──────┬───────┘
                                     │
                                     ▼
                              ┌──────────────┐
                              │              │──── B
                              └──────┬───────┘
                                     │
                                     ▼
                              ┌──────────────┐
                              │              │──── C
                              └──────┬───────┘
                                     │
                                     ▼
                       D ───┌──────────────┐◄───────────┐
                              │              │           │
                              └──────┬───────┘           │
                                     │                   │
                                     ▼                   │
                       E ───┌──────────────┐             │
                              │              │           │
                              └──────┬───────┘           │
                                     │                   │
                                     ▼                   │
        ┌──────────────┐           ◇                     │
        │              │◄── NON ──◇   ◇                  │
        │              │          ◇ F ◇                  │
        └──────┬───────┘           ◇                     │
          G                       │ OUI                  │
               │                   ▼                     │
               │                  ◇                      │
               │                 ◇   ◇─── NON ───────────┘
               │                 ◇ F' ◇
               │                  ◇
               │                 │ OUI
               │                  ▼
               │           ┌──────────────┐
               │           │              │──── H
               │           └──────┬───────┘
               │                  │
               │                  ▼
               │                 ◇
               └────────────────◇   ◇
                                 ◇   ◇──── I
                                  ◇
```

# FIG. 4

FIG. 6

FIG. 7

FIG. 8

FIG. 9

FIG. 10

FIG. 11

FIG. 12

# FIG. 13

**EP 2 726 206 B1**

## RÉFÉRENCES CITÉES DANS LA DESCRIPTION

**Documents brevets cités dans la description**

- EP 0571100 A
- US 6938504 B
- EP 2302397 A
- FR 2927999